# EUROPÄISCHE PATENTSCHRIFT

(11) **EP 1 080 557 B1**
(45) Veröffentlichungstag und Bekanntmachung des Hinweises auf die Patenterteilung: **04.07.2007**
(21) Anmeldenummer: 99932641.6
(22) Anmeldetag: 06.05.1999
(51) Int. Cl.: H04L 9/08

(54) **VERFAHREN UND ANORDNUNG ZUM RECHNERGESTÜTZTEN AUSTAUSCH KRYPTOGRAPHISCHER SCHLÜSSEL ZWISCHEN EINER ERSTEN COMPUTEREINHEIT UND EINER ZWEITEN COMPUTEREINHEIT**
METHOD AND ARRANGEMENT FOR THE COMPUTER-AIDED EXCHANGE OF CRYPTOGRAPHIC KEYS BETWEEN A FIRST COMPUTER UNIT AND A SECOND COMPUTER UNIT
PROCEDE ET DISPOSITIF D'ECHANGE ASSISTE PAR ORDINATEUR DE CLES CRYPTOGRAPHIQUES ENTRE UNE PREMIERE UNITE D'ORDINATEUR ET UNE SECONDE UNITE D'ORDINATEUR

(30) Priorität: 20.05.1998 DE 19822795
(43) Veröffentlichungstag der Anmeldung: 07.03.2001
(73) Patentinhaber: SIEMENS AKTIENGESELLSCHAFT, 80333 München (DE)
(72) Erfinder: HORN, Günther, D-81541 München (DE); MÜLLER, Klaus, D-81539 München (DE); KESSLER, Volker, D-85256 Vierkirchen (DE)
(86) Internationale Anmeldenummer: PCT/DE1999/001365
(87) Internationale Veröffentlichungsnummer: WO 1999/060747

(56) Entgegenhaltungen:
- EP-A- 0 661 844
- DE-C- 19 518 544
- DE-C- 19 518 546
- DIFFIE W ET AL: "AUTHENTICATION AND AUTHENTICATED KEY EXCHANGES" DESIGNS, CODES AND CRYPTOGRAPHY, Bd. 2, Nr. 2, 1. Juni 1992 (1992-06-01), Seiten 107-125, XP000653208 ISSN: 0925-1022 in der Anmeldung erwähnt

## Beschreibung

Die Erfindung betrifft den rechnergestützten Austausch kryptographischer Schlüssel zwischen einer ersten Computereinheit und einer zweiten Computereinheit.

Informationstechnische Systeme unterliegen verschiedenen Bedrohungen. So kann z.B. übertragene Information von einem unbefugten Dritten abgehört und verändert werden. Eine weitere Bedrohung bei der Kommunikation zweier Kommunikationspartner liegt in der Vorspiegelung einer falschen Identität eines Kommunikationspartners.

Diesen und weiteren Bedrohungen wird durch verschiedene Sicherheitsmechanismen, die das informationstechnische System vor den Bedrohungen schützen sollen, begegnet. Ein zur Sicherung verwendeter Sicherheitsmechanismus ist die Verschlüsselung der übertragenen Daten. Damit die Daten in einer Kommunikationsbeziehung zwischen zwei Kommunikationspartnern verschlüsselt werden können, müssen vor der Übertragung der eigentlichen Daten zuerst Schritte durchgeführt werden, die die Verschlüsselung vorbereiten. Die Schritte können z.B. darin bestehen, daß sich die beiden Kommunikationspartner auf einen Verschlüsselungsalgorithmus einigen und daß ggf. die gemeinsamen geheimen Schlüssel vereinbart werden.

Besondere Bedeutung gewinnt der Sicherheitsmechanismus der Verschlüsselung bei Mobilfunksystemen, da die übertragenen Daten in diesen Systemen von jedem Dritten ohne besonderen zusätzlichen Aufwand abgehört werden können.

Dies führt zu der Anforderung, eine Auswahl bekannter Sicherheitsmechanismen so zu treffen und diese Sicherheitsmechanismen geeignet zu kombinieren, sowie Kommunikätionsprotokolle zu spezifizieren, daß durch sie die Sicherheit von informationstechnischen Systemen gewährleistet wird.

Es sind verschiedene asymmetrische Verfahren zum rechnergestützen Austausch kryptographischer Schlüssel bekannt.

Asymmetrische Verfahren, die geeignet sind für Mobilfunksysteme, sind in [1], [2], [3] und [4] beschrieben.

Das in [1] beschriebene Verfahren bezieht sich ausdrücklich auf lokale Netzwerke und stellt höhere Rechenleistungsanforderungen an eine Computereinheit eines Kommunikationspartners während des Schlüsselaustauschs. Außerdem wird in dem Verfahren mehr Übertragungskapazität benötigt als bei dem erfindungsgemäßen Verfahren, da die Länge der Nachrichten größer ist als bei der Erfindung.

Das in [2] beschriebene Verfahren hat einige grundlegende Sicherheitsziele nicht realisiert. Die explizite Authentifikation des Netzes durch den Benutzer wird nicht erreicht. Außerdem wird ein vom Benutzer an das Netz übertragener Schlüssel vom Netz nicht an den Benutzer bestätigt. Auch eine Zusicherung der Frische (Aktualität) des Schlüssels für das Netz ist nicht vorgesehen. Ein weiterer Nachteil dieses Verfahrens besteht in der Beschränkung auf das Rabin-Verfahren bei der impliziten Authentifizierung des Schlüssels durch den Benutzer. Dies schränkt das Verfahren in einer flexibleren Anwendbarkeit ein. Außerdem ist kein Sicherheitsmechanismus vorgesehen, der die Nichtabstreitbarkeit von übertragenen Daten gewährleistet. Dies ist ein erheblicher Nachteil vor allem auch bei der Erstellung unanfechtbarer Gebührenabrechnungen für ein Mobilfunksystem. Auch die Beschränkung des Verfahrens auf den National Institute of Standards in Technology Signature Standard (NIST DSS) als verwendete Signaturfunktion schränkt das Verfahren in seiner allgemeinen Verwendbarkeit ein.

Das in [3] beschriebene Verfahren hat ein grundlegendes Sicherheitsziel nicht realisiert: Die explizite Authentifikation des Benutzers durch das Netz wird nicht erreicht.

Das in [4] beschriebene Verfahren basiert auf der Annahme der Existenz von gemeinsamen geheimen Schlüsseln sowohl zwischen Benutzer und besuchtem Netz als auch zwischen Benutzer und Heimatnetz vor Beginn eines Protokollaufs. Diese Annahme ist für viele Einsatzfälle zu einschränkend.

Ferner ist ein Verfahren zum sicheren Datenaustausch zwischen vielen Teilnehmern unter Mitwirkung einer Zertifizierungsinstanz aus [5] bekannt. Das bei diesem Verfahren verwendete Protokoll weist eine Zufallszahl, eine Identitätsangabe sowie einen öffentlichen Schlüssel und einen Sitzungsschlüssel auf. Grundlegende Sicherheitsziele werden jedoch bei diesem Verfahren nicht realisiert.

Weiterhin ist ein Verfahren für eine PC-PC-Kommunikation unter Mitwirkung eines Trust-Centers aus [6] bekannt.

Aus [7] ist ein Verfahren bekannt, bei dem unter Verwendung sowohl eines öffentlichen als auch eines geheimen Schlüssels sowie unter Verwendung einer Zufallszahl ein Sitzungsschlüssel erzeugt wird. Dieser wird mit einem öffentlichen Schlüssel verknüpft.

Weiterhin ist in [8] ein Verfahren beschrieben, bei dem eine Benutzereinheit sich gegenüber einer Netzeinheit identifiziert. Anschließend findet unter Anwendung einer Hash-Funktion zwischen der Benutzereinheit und der Netzeinheit ein Authentifizierungsprozeß statt.

Weitere sichere Kommunikationsprotokolle, die aber wesentliche grundlegende Sicherheitsziele nicht realisieren, sind aus [9] bekannt.

Aus [10] ist es bekannt, daß in einer ersten Computereinheit aus einer ersten Zufallszahl mit Hilfe eines erzeugenden Elements einer endlichen Gruppe ein erster Wert gebildet wird, der zu einer zu einer zweiten Computereinheit übertragen wird. In der zweiten Computereinheit wird ein Sitzungsschlüssel gebildet durch Hash-Wert-Bildung des ersten Werts, der mit einem geheimen Netzschlüssel exponiert wird. In der ersten Computereinheit wird ebenfalls der Sitzungsschlüssel gebildet, dort jedoch durch Hash-Wert-Bildung eines öffentlichen Netzschlüssels, der mit der ersten Zufallszahl exponiert wird. Ferner wird dort ein Hash-Wert über den Sitzungsschlüssel gebildet und der Hash-Wert wird digital signiert. Der sich ergebende Signatuterm wird zu der zweiten Computereinheit übertragen und dort verifiziert.

Das in [11] beschriebene Verfahren erreicht die wesentlichen Sicherheitsziele, jedoch mit einem höheren Aufwand an Rechenleistung und Übertragungskapazität.

Asymmetrische Verfahren beruhen im wesentlichen auf zwei Problemen der Komplexitätstheorie, dem Problem zusammengesetzte Zahlen effizient zu faktorisieren, und dem diskreten Logarithmusproblem (DLP). Das DLP besteht darin, daß in geeigneten Rechenstrukturen zwar Exponentiationen effizient durchgeführt werden können, daß jedoch für die Umkehrung dieser Operation, das Logarithmieren, keine effizienten Algorithmen bekannt sind.

Solche Rechenstrukturen sind z.B. unter den oben bezeichneten endlichen Gruppen zu verstehen. Diese sind z.B. die multiplikative Gruppe eines endlichen Körpers (z.B. Multiplizieren Modulo p, wobei p eine große Primzahl ist), oder auch sogenannte "elliptische Kurven". Elliptische Kurven sind vor allem deshalb interessant, weil sie bei gleichem Sicherheitsniveau wesentliche kürzere Sicherheitsparameter erlauben. Dies betrifft die Länge der öffentlichen Schlüssel, die Länge der Zertifikate, die Länge der bei der Sitzungsschlüsselvereinbarung auszutauschenden Nachrichten sowie die Länge von digitalen Signaturen, die jeweils im weiteren beschrieben werden. Der Grund dafür ist, daß die für elliptische Kurven bekannten Logarithmierverfahren wesentlich weniger effizient sind als die für endliche Körper.

Eine große Primzahl in diesem Zusammenhang bedeutet, daß die Größe der Primzahl so gewählt werden muß, daß die Logarithmierung so aufwendig ist, daß sie nicht in vertretbarer Zeit durchgeführt werden kann. Vertretbar bedeutet in diesem Zusammenhang einen Zeitraum entsprechend der Sicherheitspolitik von mehreren Jahren bis Jahrzehnten und länger.

Unter einer Hash-Funktion ist in diesem Zusammenhang eine Funktion zu verstehen, bei der es nicht möglich ist, zu einem gegebenen Funktionswert einen passenden Eingangswert zu berechnen. Ferner wird einer beliebig langen Eingangszeichenfolge eine Ausgangszeichenfolge fester Länge zugeordnet. Des weiteren können für die Hash-Funktion zusätzliche Eigenschaften gefordert werden. Eine solche zusätzliche Eigenschaft ist Kollisionsfreiheit, d.h. es darf nicht möglich sein, zwei verschiedene Eingangszeichenfolgen zu finden, die dieselbe Ausgangszeichenfolge ergeben.

Der Erfindung liegt das Problem zugrunde, ein vereinfachtes Verfahren zum rechnergestützten Austausch kryptographischer Schlüssel anzugeben, das nicht die Existenz gemeinsamer geheimer Schlüssel voraussetzt.

Dieses Problem wird durch das Verfahren gemäß Patentanspruch 1 sowie durch die Anordnung gemäß Patentanspruch 32 gelöst.

Bei dem Verfahren wird aus einer ersten Zufallszahl mit Hilfe eines erzeugenden Elements einer endlichen Gruppe in der ersten Computereinheit ein erster Wert gebildet. Eine erste Nachricht wird von der ersten Computereinheit an die zweite Computereinheit übertragen, wobei die ersten Nachricht mindestens den ersten Wert aufweist. In der zweiten Computereinheit wird ein Sitzungsschlüssel mit Hilfe einer ersten Hash-Funktion gebildet wird, wobei eine erste Eingangsgröße der ersten Hash-Funktion mindestens einen ersten Term aufweist, der gebildet wird durch eine Exponentiation des ersten Werts mit einem geheimen Netzschlüssel. In der ersten Computereinheit wird der Sitzungsschlüssel gebildet mit Hilfe der ersten Hash-Funktion, wobei eine zweite Eingangsgröße der ersten Hash-Funktion mindestens einen zweiten Term aufweist, der gebildet wird durch eine Exponentiation eines öffentlichen Netzschlüssels mit der ersten Zufallszahl. In der ersten Computereinheit wird mit Hilfe einer zweiten Hash-Funktion oder der ersten Hash-Funktion eine vierte Eingangsgröße gebildet, wobei eine dritte Eingangsgröße für die erste Hash-Funktion oder für die zweite Hash-Funktion zur Bildung der vierten Eingangsgröße eine oder weitere Größen aufweist, aus denen auf den Sitzungsschlüssel eindeutig rückgeschlossen werden kann. In der ersten Computereinheit wird ein Signaturterm aus mindestens der vierten Eingangsgröße gebildet wird unter Anwendung einer ersten Signaturfunktion. Eine dritte Nachricht wird von der ersten Computereinheit an die zweite Computereinheit übertragen, wobei die dritte Nachricht mindestens den Signaturterm der ersten Computereinheit aufweist. In der zweiten Computereinheit wird der Signaturterm verifiziert.

Bei der Anordnung sind die erste Computereinheit und die zweite Computereinheit derart eingerichtet sind, daß folgende Verfahrensschritte durchführbar sind:
- aus einer ersten Zufallszahl wird mit Hilfe eines erzeugenden Elements einer endlichen Gruppe in der ersten Computereinheit ein erster Wert gebildet,
- eine erste Nachricht wird von der ersten Computereinheit an die zweite Computereinheit übertragen, wobei die erste Nachricht mindestens den ersten Wert aufweist,
- in der zweiten Computereinheit wird ein Sitzungsschlüssel mit Hilfe einer ersten Hash-Funktion gebildet, wobei eine erste Eingangsgröße der ersten Hash-Funktion mindestens einen ersten Term aufweist, der gebildet wird durch eine Exponentiation des ersten Werts mit einem geheimen Netzschlüssel,
- in der ersten Computereinheit wird der Sitzungsschlüssel gebildet mit Hilfe der ersten Hash-Funktion, wobei eine zweite Eingangsgröße der ersten Hash-Funktion mindestens einen zweiten Term aufweist, der gebildet wird durch eine Exponentiation eines öffentlichen Netzschlüssels mit der ersten Zufallszahl,
- in der ersten Computereinheit wird mit Hilfe einer zweiten Hash-Funktion oder der ersten Hash-Funktion eine vierte Eingangsgröße gebildet wird, wobei eine dritte Eingangsgröße für die erste Hash-Funktion oder für die zweite Hash-Funktion zur Bildung der vierten Eingangsgröße eine oder weitere Größen aufweist, aus denen auf den Sitzungsschlüssel eindeutig rückgeschlossen werden kann.
- in der ersten Computereinheit wird ein Signaturterm aus mindestens der vierten Eingangsgröße gebildet unter Anwendung einer ersten Signaturfunktion,
- eine dritte Nachricht wird von der ersten Computereinheit an die zweite Computereinheit übertragen, wobei die dritte Nachricht mindestens den Signaturterm der ersten Computereinheit aufweist, und
- in der zweiten Computereinheit wird der Signaturterm verifiziert.

Die durch die Erfindung erreichten Vorteile liegen vor allem in einer erheblichen Reduktion der Länge der übertragenen Nachrichten und in der Realisierung weiterer Sicherheitsziele.

Die Erfindung ist außerdem sehr leicht an unterschiedliche Anforderungen anpaßbar, da es sich nicht auf bestimmte Algorithmen für Signaturbildung und Verschlüsselung beschränkt.

Vorteilhafte Weiterbildungen der Erfindung ergeben sich aus den abhängigen Ansprüchen.

In einer Weiterbildung ist es vorgesehen, einen langlebigen geheimen Netzschlüssel und einen langlebigen öffentlichen Netzschlüssel einzusetzen.

Unter einem langlebigen Schlüssel ist im weiteren ein Schlüssel zu verstehen, der für mehrere Protokolläufe eingesetzt wird.

Durch die Erfindung und ihre Weiterbildungen werden folgende Sicherheitsziele realisiert:
- Gegenseitige explizite Authentifizierung von dem Benutzer und dem Netz, d.h. die gegenseitige Verifizierung der behaupteten Identität,
- Schlüsselvereinbarung zwischen dem Benutzer und dem Netz mit gegenseitiger impliziter Authentifizierung, d.h., daß durch das Verfahren erreicht wird, daß nach Abschluß der Prozedur ein gemeinsamer geheimer Sitzungsschlüssel zur Verfügung steht, von dem jede Partei weiß, daß nur das authentische Gegenüber sich ebenfalls im Besitz des geheimen Sitzungsschlüssels befinden kann,
- Zusicherung der Frische (Aktualität) des Sitzungsschlüssels für den Benutzer,
- gegenseitige Bestätigung des Sitzungsschlüssels von dem Benutzer und dem Netz, d.h. die Bestätigung, daß das Gegenüber tatsächlich im Besitz des vereinbarten geheimen Sitzungsschlüssels ist.

Auf diese Sicherheitsziele beziehen sich auch die folgenden vorteilhaften Weiterbildungen des Verfahrens.

In einer Weiterbildung wird zusätzlich in der ersten Computereinheit ein vertrauenswürdiger öffentlicher Benutzerschlüssel der ersten Computereinheit z.B. in Form eines Benutzerzertifikats verfügbar gemacht und in der zweiten Computereinheit wird ein vertrauenswürdiger öffentlicher Netzschlüssel der zweiten Computereinheit z.B. in Form eines Netzzertifikats verfügbar gemacht. Der öffentliche Netzschlüssel muß bei dieser Weiterbildung nicht in der ersten Computereinheit verfügbar sein.

In einer weiteren Ausgestaltung ist es nicht nötig, daß der öffentliche Benutzerschlüssel in der zweiten Computereinheit verfügbar ist.

Gemäß einer weiteren Ausgestaltung ist in der ersten Computereinheit kein vertrauenswürdiger öffentlicher Netzschlüssel der zweiten Computereinheit erforderlich. In der ersten Computerenheit ist ein vertrauenswürdiger öffentlicher Zertifizierungsschlüssel der Zertifizierungscomputereinheit verfügbar. Dies bedeutet, daß die erste Computereinheit sich den vertrauenswürdigen öffentlichen Netzschlüssel in Form eines Netzzertifikats von einer Zertifizierungscomputereinheit "besorgen" muß. Ebenso braucht die zweite Computereinheit den vertrauenswürdigen öffentlichen Benutzerschüssel in Form eines Benutzerzertifikats von der Zertifizierungscomputereinheit.

Durch die Weiterbildungen der Erfindung gemäß den Patentansprüchen 13, 15 und 20 wird das Sicherheitsziel der Benutzeranonymität realisiert, d.h. die Vertraulichkeit der Identität des Benutzers gegenüber Dritten.

Die Weiterbildung des erfindungsgemäßen Verfahrens gemäß Patentanspruch 15 ermöglicht die Verwendung von temporären Benutzeridentitäten.

Durch die Weiterbildung des Verfahrens gemäß Patentanspruch 16 wird vor allem eine zusätzliche Authentifizierung der zweiten Computereinheit gegenüber der ersten Computereinheit gewährleistet.

Durch die Weiterbildung gemäß Patentanspruch 18 wird das Sicherheitsziel der Zusicherung der Frische (Aktualität) des Sitzungsschlüssels für das Netz realisiert.

Durch die Weiterbildung gemäß Patentanspruch 21 wird zusätzlich das Sicherheitsziel der Nichtabstreitbarkeit von Daten realisiert, die vom Benutzer an das Netz gesendet wurden.

Die Zeichnungen stellen bevorzugte Ausführungsbeispiele der Erfindung dar, die im folgenden näher beschrieben werden.

Es zeigen
- Figur 1: ein Ablaufdiagramm, das ein erstes Ausführungsbeispiel des Verfahrens mit einigen Weiterbildungen darstellt;
- Figur 2: ein Ablaufdiagramm, das ein zweites Ausführungsbeispiel des Verfahrens mit einigen Weiterbildungen darstellt;
- Figuren: 3 ein Ablaufdiagramm, das ein drittes Ausführungsbeispiel des Verfahrens mit einigen Weiterbildungen darstellt;

### Erstes Ausführungsbeispiel

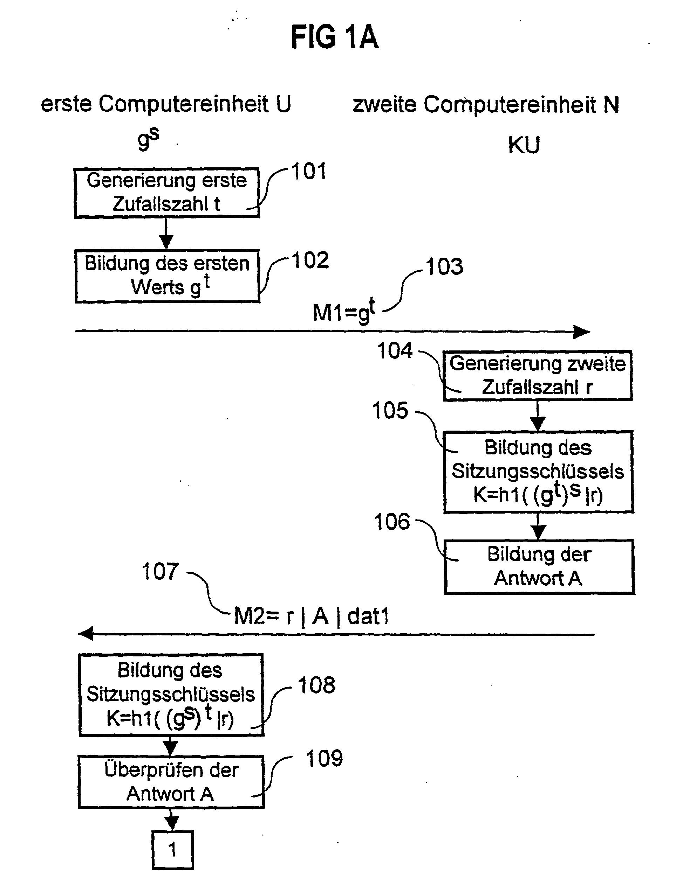

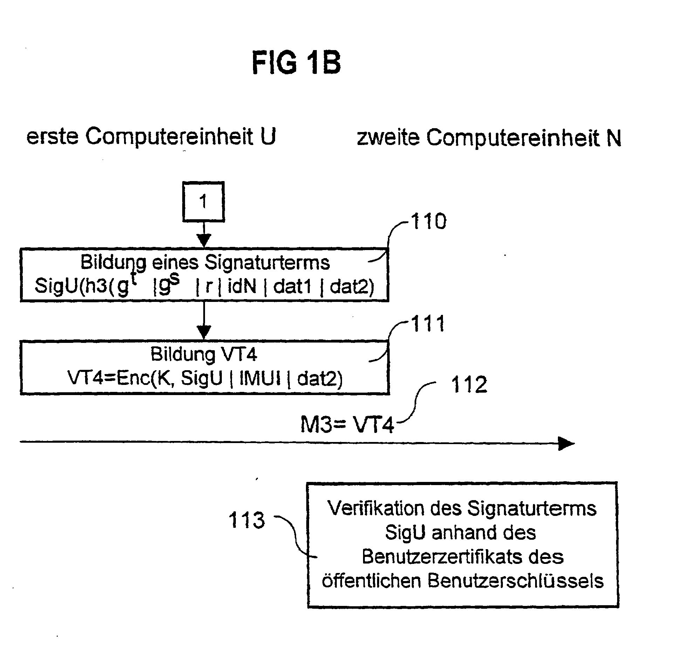

In Figur 1 ist durch eine Skizze der Ablauf des Verfahrens dargestellt. Das Verfahren betrifft den Austausch kryptographischer Schlüssel zwischen einer ersten Computereinheit U und einer zweiten Computereinheit N, wobei unter der ersten Computereinheit U eine Computereinheit eines Benutzers eines Mobilfunknetzes zu verstehen ist und unter einer zweiten Computereinheit N eine Computereinheit des Netzbetreibers eines Mobilfunksystems zu verstehen ist.

Für das Verfahren wird vorausgesetzt, daß in der ersten Computereinheit U ein vertrauenswürdiger öffentlicher Netzschlüssel g^{s} der zweiten Computereinheit N verfügbar ist und daß in der zweiten Computereinheit N ein vertrauenswürdiger öffentlicher Benutzerschlüssel KU der ersten Computereinheit U verfügbar ist, wobei g ein erzeugendes Element einer endlichen Gruppe ist.

In der ersten Computereinheit U wird eine erste Zufallszahl t generiert (Schritt 101). Aus der ersten Zufallszahl t wird mit Hilfe des erzeugenden Elements g einer endlichen Gruppe in der ersten Computereinheit U ein erster Wert g^{t} gebildet (Schritt 102).

Nach der Berechnung des ersten Werts g^{t} wird eine erste Nachricht M1 codiert, die mindestens den ersten Wert g^{t} aufweist. Die erste Nachricht M1 wird von der ersten Computereinheit U an die zweite Computereinheit N übertragen (Schritt 103).

In der zweiten Computereinheit N wird die erste Nachricht M1 decodiert. Die erste Nachricht M1 kann auch über einen unsicheren Kanal, also auch über eine Luftschnittstelle, unverschlüsselt übertragen werden, da die Logarithmierung des ersten Wertes g^{t} nicht in vertretbarer Zeit durchgeführt werden kann.

In der zweiten Computereinheit N wird eine zweite Zufallszahl r generiert (Schritt 104). Durch diesen zusätzlichen Verfahrensschritt wird ein zusätzliches Sicherheitsziel realisiert: die Zusicherung der Frische (Aktualität) eines im folgenden beschriebenen Sitzungsschlüssels K für die zweite Computereinheit N.

In der zweiten Computereinheit N wird mit Hilfe einer ersten Hash-Funktion h1 ein Sitzungsschlüssel K gebildet (Schritt 105). Als eine erste Eingangsgröße der ersten Hash-Funktion h1 wird mindestens ein erster Term verwendet. Der erste Term wird gebildet, indem der erste Wert g^{t} potenziert wird mit einem geheimen Netzschlüssel s.

Wenn die zweite Zufallszahl r verwendet wird; so weist die erste Eingangsgröße der ersten Hash-Funktion h1 zusätzlich mindestens die zweite Zufallszahl r auf.

Nun wird in der zweiten Computereinheit N eine Antwort A gebildet (Schritt 106). Zur Bildung der Antwort A sind verschiedene Varianten vorgesehen. So ist es z.B. möglich, daß mit dem Sitzungsschlüssel K unter Verwendung einer Verschlüsselungsfunktion Enc eine Konstante const, sowie eventuell weitere Größen, verschlüsselt wird. Die Konstante const ist sowohl der ersten Computereinheit U als auch der zweiten Computereinheit N bekannt. Auch die Verschlüsselungsfunktion Enc ist sowohl der zweiten Computereinheit N als auch der ersten Computereinheit U als die in dem Verfahren zu verwendende Verschlüsselungsfunktion bekannt.

Eine weitere Möglichkeit, die Antwort A zu bilden (Schritt 106) liegt darin, daß der Sitzungsschlüssel K, sowie eventuell vorgebbare weitere Größen, z.B. eine Identitätsangabe idN der zweiten Computereinheit N und/oder die zweite Zufallszahl als Eingangsgröße für eine zweite Hash-Funktion h2 verwendet wird und der "gehashte" Wert des Sitzungsschlüssels K, sowie eventuell der weiteren Größen, als Antwort A verwendet wird.

Eine Aneinanderreihung der zweiten Zufallszahl r, der Antwort A, sowie ein optionales erstes Datenfeld dat1 bilden eine zweite Nachricht M2. Das optionale erste Datenfeld dat1 ist nur in der zweiten Nachrichten M2 enthalten, wenn dies in dem Verfahren vorgesehen ist.

Die zweite Nachricht M2 wird in der zweiten Computereinheit N codiert und zu der ersten Computereinheit U übertragen (Schritt 107).

In der ersten Computereinheit U wird die zweite Nachricht M2 decodiert, so daß die erste Computereinheit U die zweite Zufallszahl r, die Antwort A sowie eventuell das optionale erste Datenfeld dat1 zur Verfügung hat. Die Länge des optionalen ersten Datenfeldes dat1 kann beliebig groß sein, d.h. es ist auch möglich, daß das optionale erste Datenfeld dat1 nicht vorhanden ist.

In der ersten Computereinheit U wird nun ebenfalls der Sitzungsschlüssel K gebildet (Schritt 108), mit Hilfe der ersten Hash-Funktion h1, die sowohl der zweiten Computereinheit N als auch der ersten Computereinheit U bekannt ist. Eine zweite Eingangsgröße der ersten Hash-Funktion h1 zur Bildung des Sitzungsschlüssels K in der ersten Computereinheit U weist mindestens einen zweiten Term auf. Der zweite Term wird gebildet aus einer Exponentation eines öffentlichen Netzschlüssels g^{s} mit der ersten Zufallszahl t. Wenn die Verwendung der zweiten Zufallszahl r in dem Verfahren zur Berechnung des Sitzungsschlüssels K vorgesehen wird, so weist die zweite Eingangsgröße der ersten Hash-Funktion h1 zur Bildung des Sitzungsschlüssels K in der ersten Computereinheit U zusätzlich die zweite Zufallszahl r auf.

Durch die Verwendung der ersten Zufallszahl t und der zweiten Zufallszahl r bei der Generierung des Sitzungsschlüssels K wird die Aktualität des Sitzungsschlüssels K gewährleistet, da jeweils die erste Zufallszahl t als auch die zweite Zufallszahl r nur für jeweils einen Sitzungsschlüssel K verwendet werden. Somit wird eine Wiedereinspielung eines älteren Schlüssels als Sitzungsschlüssel K verhindert.

Nachdem in der ersten Computereinheit U der Sitzungsschlüssel K gebildet wurde, wird anhand der empfangenen Antwort A überprüft, ob der in der ersten Computereinheit U gebildete Sitzungsschlüssel K mit dem Sitzungsschlüssel K, der in der zweiten Computereinheit N gebildet wurde, übereinstimmt (Schritt 109). Abhängig von den im vorigen beschriebenen Varianten zur Bildung der Antwort A sind verschiedene Möglichkeiten vorgesehen, den Sitzungsschlüssel K anhand der Antwort A zu überprüfen.

Eine Möglichkeit besteht darin, daß, wenn die Antwort A in der zweiten Computereinheit N durch Verschlüsselung der Konstante const, sowie eventuell weitere Größen, mit dem Sitzungsschlüssel K unter Verwendung der Verschlüsselungsfunktion Enc gebildet wurde, die Antwort A entschlüsselt wird, und somit die erste Computereinheit U eine entschlüsselte Konstante const', sowie eventuell vorgebbare weitere Größen, erhält, die mit der bekannten Konstante const, sowie eventuell den weiteren Größen, verglichen wird.

Die Überprüfung des Sitzungsschlüssels K anhand der Antwort A kann auch durchgeführt werden, indem die der ersten Computereinheit U bekannte Konstante const, sowie eventuell vorgebbare weitere Größen, mit dem in der ersten Computereinheit U gebildeten Sitzungsschlüssel K unter Verwendung der Verschlüsselungsfunktion Enc verschlüsselt wird und das Ergebnis mit der Antwort A auf Übereinstimmung geprüft wird. Diese Vorgehensweise wird auch verwendet, wenn die Antwort A in der zweiten Computereinheit N gebildet wird, indem auf den Sitzungsschlüssel K, sowie eventuell den weiteren Größen, die zweite Hash-Funktion h2 angewendet wird. In diesem Fall wird in der ersten Computereinheit U der in der ersten Computereinheit U gebildete Sitzungsschlüssel K, sowie eventuell vorgebbare weiteren Größen, als Eingangsgröße der zweiten Hash-Funktion h2 verwendet. Der "gehashte" Wert des in der ersten Computereinheit U gebildeten Sitzungsschlüssels K, sowie eventuell weiterer Größen, wird dann mit der Antwort A auf Übereinstimmung geprüft. Damit wird das Ziel der Schlüsselbestätigung des Sitzungsschlüssels K erreicht.

Dadurch, daß bei der Berechnung des Sitzungsschlüssels K in der zweiten Computereinheit N der geheime Netzschlüssel s und bei der Berechnung des Sitzungsschlüssels K in der ersten Computereinheit U der öffentliche Netzschlüssel g^{s} verwendet werden, wird die zweite Computereinheit N durch die erste Computereinheit U authentifiziert. Dies wird erreicht, vorausgesetzt daß für die erste Computereinheit U bekannt ist, daß der öffentliche Netzschlüssel g^{s} tatsächlich zur zweiten Computereinheit N gehört.

Im Anschluß an die Bestätigung des Sitzungsschlüssels K durch Überprüfung der Antwort A wird ein Signaturterm berechnet (Schritt 110). Hierzu wird mit Hilfe einer dritten Hash-Funktion h3 eine vierte Eingangsgröße gebildet. Die dritte Hash-Funktion h3 kann, muß aber nicht dieselbe Hash-Funktion sein wie die erste Hash-Funktion h1 und/oder die zweite Hash-Funktion h2. Als eine dritte Eingangsgröße für die dritte Hash-Funktion h3 wird ein Term verwendet, der eine oder weitere Größen aufweist, aus denen auf den Sitzungsschlüssel eindeutig rückgeschlossen werden kann,enthält. Weiterhin kann die dritte Eingangsgröße das optionale erste Datenfeld dat1 oder auch ein optionales zweites Datenfeld dat2 enthalten, wenn deren Verwendung in dem Verfahren vorgesehen wird.

Solche Größen sind der erste Wert g^{t}, der öffentliche Netzschlüssel g^{s} sowie die zweite Zufallszahl r.

Es kann später nicht abgestritten werden, daß die Daten, die im ersten optionale Datenfeld dat1 und im zweiten optionalen Datenfeld dat2 enthalten sind, von der ersten Computereinheit U gesendet wurden.

Die in dem ersten optionalen Datenfeld dat1 und in dem zweiten optionalen Datenfeld dat2 enthaltenen Daten können Telefonnummern, die aktuelle Zeit oder ähnliche hierfür geeignete Parameter sein. Diese Information kann als Werkzeug für eine unanfechtbare Gebührenabrechnung verwendet werden.

Unter Verwendung einer ersten Signaturfunktion Sig_{U} wird der Signaturterm aus mindestens der vierten Eingangsgröße gebildet. Um einen höheren Sicherheitsgrad zu erzielen, kann der Signaturterm verschlüsselt werden. Der Signaturterm wird in diesem Fall mit dem Sitzungsschlüssel K unter Verwendung der Verschlüsselungsfunktion Enc verschlüsselt und bildet den ersten verschlüsselten Term VT1.

Außerdem wird, falls das Sicherheitsziel "Anonymität des Benutzers" realisiert werden soll, ein zweiter verschlüsselter Term VT2 berechnet, in dem eine Identitätsgröße IMUI der ersten Computereinheit U mit dem Sitzungschlüssel K mit Hilfe der Verschlüsselungsfunktion Enc verschlüsselt wird. Bei Verwendung eines optionalen zweiten Datenfeldes dat2 wird in der ersten Computereinheit U ein dritter verschlüsselter Term VT3 berechnet, indem das optionale zweite Datenfeld dat2 mit dem Sitzungsschlüssel K unter Verwendung der Verschlüsselungsfunktion Enc verschlüsselt wird, das optionale zweite Datenfeld dat2 kann auch unverschlüsselt übertragen werden.

Die drei verschlüsselten Terme können auch zu einem vierten verschlüsselten Term VT4 zusammengefasst werden, in dem die Verkettung von Signaturterm, Identitätsgröße IMUI und optionalem zweiten Datenfeld dat2 mit dem Sitzungsschlüssel K verschlüsselt ist (Schritt 111).

In der ersten Computereinheit U wird eine dritte Nachricht M3 gebildet und codiert, die mindestens den Signaturterm und die Identitätsgröße IMUI der ersten Computereinheit U aufweist.

Falls die Anonymität der ersten Computereinheit U gewährleistet werden soll, weist die dritte Nachricht M3 anstatt der Identitätsgröße IMUI der ersten Computereinheit U mindestens entweder den zweiten verschlüsselten Term VT2 oder den vierten verschlüsselten Term VT4 auf, der die Information über die Identität der ersten Computereinheit U in verschlüsselter Form enthält, die nur von der zweiten Computereinheit N entschlüsselt werden kann.

Wenn die Verwendung des optionalen zweiten Datenfelds dat2 vorgesehen wird, weist die dritte Nachricht M3 zusätzlich mindestens den dritten verschlüsselten Term VT3 oder den vierten verschlüsselten Term VT4 oder das optionale zweite Datenfeld dat2 im Klartext auf.

Wenn die dritte Nachricht M3 den ersten verschlüsselten Term VT1, den zweiten verschlüsselten Term VT2 oder den dritten verschlüsselten Term VT3 oder den vierten verschlüsselten Term VT4 enthält, werden diese in der zweiten Computereinheit N entschlüsselt. Dies geschieht für den eventuell vorhandenen ersten verschlüsselten Term VT1 vor der Verifikation des Signaturterms.

Die dritte Nachricht M3 wird von der ersten Computereinheit U zu der zweiten Computereinheit N übertragen (Schritt 112).

Zusätzlich wird die Authentifikation der ersten Computereinheit U gegenüber der zweiten Computereinheit N durch den Signaturterm gewährleistet, der die Zufallszahl r enthält, durch deren Verwendung garantiert wird, daß die dritte Nachricht M3 tatsächlich aktuell von der ersten Computereinheit U gesendet wurde.

In der zweiten Computereinheit N wird die dritte Nachricht M3 decodiert, entschlüsselt und anschließend wird anhand eines Benuterzertifikats CertU, das der zweiten Computereinheit N zur Verfügung steht, der Signaturterm verifiziert (Schritt 113).

Wenn für das Verfahren temporäre Benutzeridentitäten vorgesehen werden, so wird das im vorigen beschriebene Verfahren um einige Verfahrensschritte erweitert.

Zuerst muß der zweiten Computereinheit N bekannt gemacht werden, welche erste Computereinheit U eine neue temporäre Identitätsgröße TMUIN von der zweiten Computereinheit N zugewiesen bekommen soll.

Hierzu wird als zusätzlicher Bestandteil der ersten Nachricht M1 eine alte temporäre Identitätsgröße TMUIO von der ersten Computereinheit U an die zweite Computereinheit N übertragen.

Nach Empfang der ersten Nachricht M1 ist somit in der zweiten Computereinheit N bekannt, für welche erste Computereinheit U die neue temporäre Identitätsgröße TMUIN bestimmt ist.

In der zweiten Computereinheit N wird dann die neue temporäre Identitätsgröße TMUIN für die erste Computereinheit U gebildet. Dies kann z. B. durch Generierung einer Zufallszahl oder durch Tabellen, in denen mögliche Identitätsgrößen abgespeichert sind, durchgeführt werden. Aus der neuen temporären Identitätsgröße TMUIN der ersten Computereinheit U wird in der zweiten Computereinheit N ein fünfter verschlüsselter Term VT5 gebildet, indem die neue temporäre Identitätsgröße TMUIN der ersten Computereinheit U mit dem Sitzungsschlüssel K unter Verwendung der Verschlüsselungsfunktion Enc verschlüsselt wird.

In diesem Fall weist die zweite Nachricht N2 zusätzlich mindestens den fünften verschlüsselten Term VT5 auf. Der fünfte verschlüsselte Term VT5 wird dann in der ersten Computereinheit U entschlüsselt. Nun ist die neue temporäre Identitätsgröße TMUIN der ersten Computereinheit U in der ersten Computereinheit U verfügbar.

Damit der zweiten Computereinheit N auch gewährleistet wird, daß die erste Computereinheit U die neue temporäre Identitätsgröße TMUIN korrekt empfangen hat, weist die dritte Eingangsgröße für die erste Hash-Funktion h1 oder für die dritte Hash-Funktion h3 zusätzlich mindestens die neue temporäre Identitätsgröße TMUIN der ersten Computereinheit U auf.

Da die Information der neuen temporären Identitätsgröße TMUIN in dem Signaturterm in diesem Fall enthalten ist, weist die dritte Nachricht M3 nicht mehr die Identitätsgröße IMUI der ersten Computereinheit U auf.

Es ist auch möglich, die neue temporäre Identitätsgröße TMUIN nicht in den Signaturterm zu integrieren, sondern den zweiten verschlüsselten Term VT2 zu bilden, indem anstatt der Identitätsgröße IMUI der ersten Computereinheit U die neue temporäre Identitätsgröße TMUIN mit dem Sitzungsschlüssel K unter Verwendung der Verschlüsselungsfunktion Enc verschlüsselt wird. In diesem Fall weist die dritte Nachricht M3 zusätzlich den zweiten verschlüsselten Term VT2 auf.

Die in dem Verfahren verwendeten Hash-Funktionen, die erste Hash-Funktion h1, die zweite Hash-Funktion h2 und die dritte Hash-Funktion h3 können durch die gleiche, aber auch durch verschiedene Hash-Funktionen realisiert werden.

### Zweites Ausführungsbeispiel

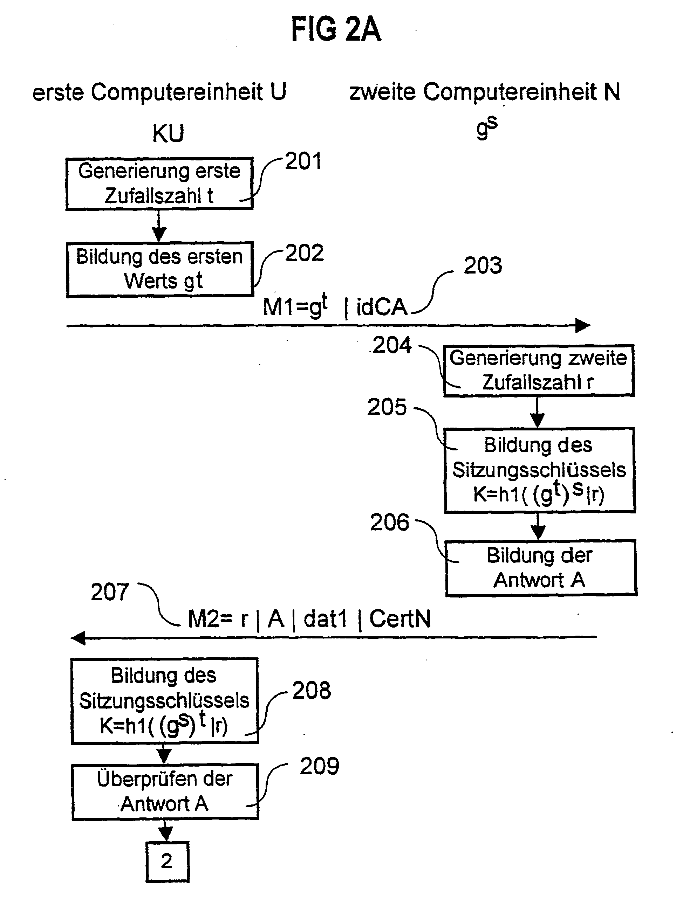

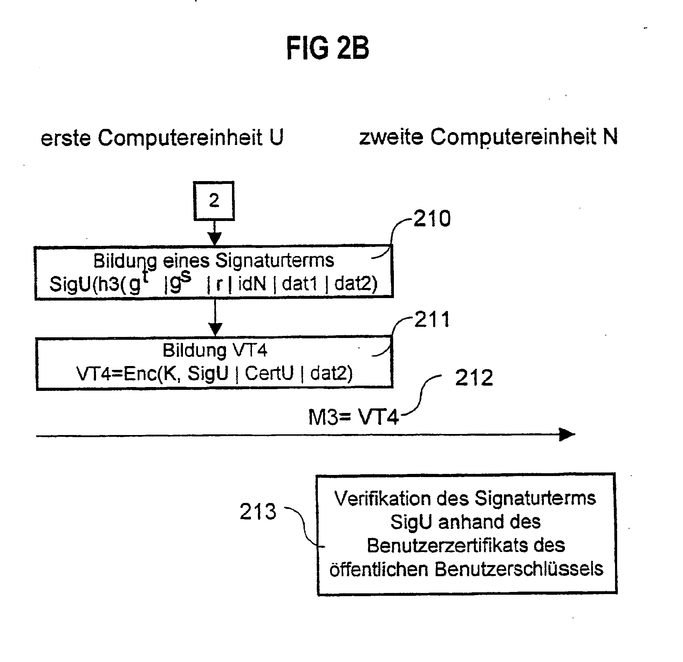

In Figur 2 ist durch eine Skizze der Ablauf eines zweiten Ausführungsbeispiels des Verfahrens dargestellt.

Für dieses Ausführungsbeispiel des Verfahrens wird vorausgesetzt, daß in der ersten Computereinheit U ein vertrauenswürdiger öffentlicher Benutzerschlüssel KU der ersten Computereinheit U in Form eines Benutzerzertifikats CertU verfügbar gemacht wird und daß in der zweiten Computereinheit N ein vertrauenswürdiger öffentlicher Netzschlüssel g^{s} der zweiten Computereinheit N in Form eines Netzzertifikats CertN verfügbar gemacht wird. Der öffentliche Netzschlüssel g^{s} muß nicht in der ersten Computereinheit U verfügbar sein. Ebenso ist es nicht nötig, daß der öffentliche Benutzerschlüssel KU in der zweiten Computereinheit N verfügbar ist.

In der ersten Computereinheit U wird die erste Zufallszahl t generiert (Schritt 201). Aus der ersten Zufallszahl t wird mit Hilfe des erzeugenden Elements g einer endlichen Gruppe in der ersten Computereinheit U der erste Wert g^{t} gebildet (Schritt 202).

Nach der Berechnung des ersten Werts g^{t} wird eine erste Nachricht M1 codiert, die mindestens den ersten Wert g^{t} und eine Identitätsangabe id_{CA} einer Zertifizierungscomputereinheit CA, die das Netzzertifikat CertN liefert, das von der ersten Computereinheit U verifiziert werden kann, aufweist. Die erste Nachricht M1 wird von der ersten Computereinheit U an die zweite Computereinheit N übertragen (Schritt 203).

In der zweiten Computereinheit N wird die erste Nachricht M1 decodiert.

Wie in Figur 2 beschrieben, wird in der zweiten Computereinheit N eine zweite Zufallszahl r generiert wird (Schritt 204). Durch diesen zusätzlichen Verfahrensschritt wird ein zusätzliches Sicherheitsziel realisiert: die Zusicherung der Frische (Aktualität) eines im folgenden beschriebenen Sitzungsschlüssels K für die zweite Computereinheit N.

In der zweiten Computereinheit N wird mit Hilfe der ersten Hash-Funktion h1 der Sitzungsschlüssel K gebildet (Schritt 205). Als erste Eingangsgröße der ersten Hash-Funktion h1 wird ein erster Term verwendet. Der erste Term wird gebildet, indem der erste Wert g^{t} potenziert wird mit dem geheimen Netzschlüssel s.

Wenn die zweite Zufallszahl r verwendet wird, so weist die erste Eingangsgröße der ersten Hash-Funktion h1 zusätzlich mindestens die zweite Zufallszahl r auf.

Nun wird in der zweiten Computereinheit N eine Antwort A gebildet (Schritt 206). Zur Bildung der Antwort A sind die im Rahmen des ersten Ausführungsbeispiels beschriebenen Varianten vorgesehen.

Eine Aneinanderreihung der zweiten Zufallszahl r, des Netzzertifikats CertN, der Antwort A, sowie ein optionales erstes Datenfeld dat1 bilden die zweite Nachricht M2. Das optionale erste Datenfeld dat1 ist nur in der zweiten Nachricht M2 enthalten, wenn dies in dem Verfahren vorgesehen ist.

Die zweite Nachricht M2 wird in der zweiten Computereinheit N codiert und zu der ersten Computereinheit U übertragen (Schritt 207).

In der ersten Computereinheit U wird die zweite Nachricht M2 decodiert, so daß die erste Computereinheit U die zweite Zufallszahl r, die Antwort A sowie eventuell das optionale erste Datenfeld dat1 zur Verfügung hat. Die Länge des optionalen ersten Datenfeldes dat1 kann beliebig groß sein, d.h. es ist auch möglich, daß das optionale erste Datenfeld dat1 nicht vorhanden ist.

Anschließend wird das in der zweiten Nachricht M2 enthaltene Netzzertifikat CertN in der ersten Computereinheit verifiziert. Somit steht der öffentliche Netzschlüssel g^{s} in der ersten Computereinheit U zur Verfügung.

In der ersten Computereinheit U wird nun ebenfalls der Sitzungsschlüssel K gebildet (Schritt 208), mit Hilfe der ersten Hash-Funktion h1, die sowohl in der zweiten Computereinheit N als auch in der ersten Computereinheit U bekannt ist. Eine zweite Eingangsgröße der ersten Hash-Funktion h1 zur Bildung des Sitzungsschlüssels K in der ersten Computereinheit U weist mindestens einen zweiten Term auf. Der zweite Term wird gebildet aus einer Exponentation des öffentlichen Netzschlüssels g^{s} mit der ersten Zufallszahl t. Wenn die Verwendung der zweiten Zufallszahl r in dem Verfahren zur Berechnung des Sitzungsschlüssels K vorgesehen wird, so weist die zweite Eingangsgröße der ersten Hash-Funktion h1 zur Bildung des Sitzungsschlüssels K in der ersten Computereinheit U zusätzlich die zweite Zufallszahl r auf.

Durch die Verwendung der ersten Zufallszahl t und der zweiten Zufallszahl r bei der Generierung des Sitzungsschlüssels K wird die Aktualität des Sitzungsschlüssels K gewährleistet, da jeweils die erste Zufallszahl t als auch die zweite Zufallszahl r nur für jeweils einen Sitzungsschlüssel K verwendet werden. Somit wird eine Wiedereinspielung eines älteren Schlüssels als Sitzungsschlüssel K verhindert.

Nachdem in der ersten Computereinheit U der Sitzungsschlüssel K gebildet wurde, wird anhand der empfangenen Antwort A überprüft, ob der in der ersten Computereinheit U gebildete Sitzungsschlüssel K mit dem Sitzungsschlüssel K, der in der zweiten Computereinheit N gebildet wurde, übereinstimmt (Schritt 209).

Abhängig von den im vorigen beschriebenen Varianten zur Bildung der Antwort A sind verschiedene Möglichkeiten vorgesehen, den Sitzungsschlüssel K anhand der Antwort A zu überprüfen.

Zur Überprüfung der Antwort A sind die im Rahmen des ersten Ausführungsbeispiels beschriebenen Varianten vorgesehen. Damit wird das Ziel der Schlüsselbestätigung des Sitzungsschlüssels K erreicht.

Dadurch, daß bei der Berechnung des Sitzungsschlüssels K in der zweiten Computereinheit N der geheime Netzschlüssel s und bei der Berechnung des Sitzungsschlüssels K in der ersten Computereinheit U der öffentliche Netzschlüssel g^{s} verwendet werden, wird die zweite Computereinheit N durch die erste Computereinheit U authentifiziert. Dies wird erreicht, vorausgesetzt daß für die erste Computereinheit U bekannt ist, daß der öffentliche Netzschlüssel g^{s} tatsächlich zur zweiten Computereinheit N gehört.

Im Anschluß an die Bestätigung des Sitzungsschlüssels K durch Überprüfung der Antwort A wird der Signaturterm berechnet (Schritt 210). Hierzu wird mit Hilfe der dritten Hash-Funktion h3 eine vierte Eingangsgröße gebildet. Die dritte Hash-Funktion h3 kann, muß aber nicht dieselbe Hash-Funktion sein wie die erste Hash-Funktion h1 und/oder die zweite Hash-Funktion h2. Als eine dritte Eingangsgröße für die dritte Hash-Funktion h3 wird ein Term verwendet, der eine oder weitere Größen aufweist, aus denen auf den Sitzungsschlüssel eindeutig rückgeschlossen werden kann. Weiterhin kann die dritte Eingangsgröße das optionale erste Datenfeld dat1 oder auch ein optionales zweites Datenfeld dat2 enthalten, wenn deren Verwendung in dem Verfahren vorgesehen wird.

Solche Größen sind der erste Wert g^{t}, der öffentliche Netzschlüssel g^{s} sowie die zweite Zufallszahl r.

Es kann später nicht abgestritten werden, daß die Daten, die im ersten optionale Datenfeld dat1 und im zweiten optionalen Datenfeld dat2 enthalten sind, von der ersten Computereinheit U gesendet wurden.

Die in dem ersten optionalen Datenfeld dat1 und in dem zweiten optionalen Datenfeld dat2 enthaltenen Daten können Telefonnummern, die aktuelle Zeit oder ähnliche hierfür geeignete Parameter sein. Diese Information kann als Werkzeug für eine unanfechtbare Gebührenabrechnung verwendet werden.

Unter Verwendung einer ersten Signaturfunktion Sig_{U} wird der Signaturterm aus mindestens der vierten Eingangsgröße gebildet. Um einen höheren Sicherheitsgrad zu erzielen, kann der Signaturterm verschlüsselt werden. Der Signaturterm wird in diesem Fall mit dem Sitzungsschlüssel K unter Verwendung der Verschlüsselungsfunktion Enc verschlüsselt und bildet den ersten verschlüsselten Term VT1.

Außerdem wird, falls das Sicherheitsziel "Anonymität des Benutzers" realisiert werden soll, ein zweiter verschlüsselter Term VT2 berechnet, in dem ein Benutzerzertifikat CertU der ersten Computereinheit U mit dem Sitzungschlüssel K mit Hilfe der Verschlüsselungsfunktion Enc verschlüsselt wird. Bei Verwendung eines optionalen zweiten Datenfeldes dat2 kann in der ersten Computereinheit U ein dritter verschlüsselter Term VT3 berechnet werden, indem das optionale zweite Datenfeld dat2 mit dem Sitzungsschlüssel K unter Verwendung der Verschlüsselungsfunktion Enc verschlüsselt wird. Das optionale zweite Datenfeld dat2 kann ebenso unverschlüselt übertragen werden.

Die drei verschlüsselten Terme können auch zu einem vierten verschlüsselten Term VT4 zusammengefasst werden, in dem die Verkettung von Signaturterm, Identitätsgröße IMUI und optionalem zweiten Datenfeld dat2 mit K verschlüsselt ist (Schritt 211).

In der ersten Computereinheit U wird eine dritte Nachricht M3 gebildet und codiert, die mindestens den Signaturterm und das Benutzerzertifikat CertU der ersten Computereinheit U aufweist. Falls die Benutzeranonymität der ersten Computereinheit U gewährleistet werden soll, weist die dritte Nachricht M3 anstatt des Benutzerzertifikats CertU der ersten Computereinheit U mindestens entweder den zweiten verschlüsselten Term VT2 oder den vierten verschlüsselten Term VT4 auf, der das Benutzerzertifikat CertU der ersten Computereinheit U in verschlüsselter Form enthält, die nur von der zweiten Computereinheit N entschlüsselt werden kann.

Wenn die Verwendung des optionalen zweiten Datenfelds dat2 vorgesehen wird, weist die dritte Nachricht M3 zusätzlich mindestens den dritten verschlüsselten Term VT 3 oder den vierten verschlüsselten Term VT4 auf. Wenn die dritte Nachricht M3 den ersten verschlüsselten Term VT1, den zweiten verschlüsselten Term VT2 oder den dritten verschlüsselten Term VT3 oder den vierten verschlüsselten Term VT4 aufweist, werden diese in der zweiten Computereinheit N entschlüsselt. Dies geschieht für den eventuell vorhandenen ersten verschlüsselten Term VT1 vor der Verifikation des Signaturterms.

Die dritte Nachricht M3 wird von der ersten Computereinheit U zu der zweiten Computereinheit N übertragen (Schritt 212).

In der zweiten Computereinheit N wird die dritte Nachricht M3 decodiert, entschlüsselt und anschließend wird anhand eines Benuterzertifikats CertU, das der zweiten Computereinheit N zur Verfügung steht, der Signaturterm verifiziert (Schritt 213).

Zusätzlich wird die Authentifikation der ersten Computereinheit U gegenüber der zweiten Computereinheit N durch den Signaturterm gewährleistet, der die Zufallszahl r enthält, durch deren Verwendung garantiert wird, daß die dritte Nachricht M3 tatsächlich aktuell von der ersten Computereinheit U gesendet wurde.

Wenn für das Verfahren temporäre Benutzeridentitäten vorgesehen werden, so wird das im vorigen beschriebene Verfahren um einige Verfahrensschritte erweitert.

In der zweiten Computereinheit N wird für die erste Computereinheit U eine neue temporäre Identitätsgröße TMUIN gebildet, die der ersten Computereinheit U im weiteren zugewiesen wid. Dies kann durch Generierung einer Zufallszahl oder durch Tabellen, in denen mögliche Identitätsgrößen abgespeichert sind, durchgeführt werden. Aus der neuen tempörären Identitätsgröße TMUIN der ersten Computereinheit U wird in der zweiten Computereinheit N ein fünfter verschlüsselter Term VT5 gebildet, indem die neue temporäre Identitätsgröße TMUIN der ersten Computereinheit U mit dem. Sitzungsschlüssel K unter Verwendung der Verschlüsselungsfunktion Enc verschlüsselt wird.

In diesem Fall weist die zweite Nachricht M2 zusätzlich mindestens den fünften verschlüsselten Term VT5 auf. Der fünfte verschlüsselte Term VT5 wird dann in der ersten Computereinheit U entschlüsselt. Nun ist die neue temporäre Identitätsgröße TMUIN der ersten Computereinheit U in der ersten Computereinheit U verfügbar.

Damit der zweiten Computereinheit N auch gewährleistet wird, daß die erste Computereinheit U die neue temporäre Identitätsgröße TMUIN korrekt empfangen hat, weist die dritte Eingangsgröße für die erste Hash-Funktion h1 oder für die dritte Hash-Funktion h3 zusätzlich mindestens die neue temporäre Identitätsgröße TMUIN der ersten Computereinheit U auf.

Es ist auch möglich, die neue temporäre Identitätsgröße TMUIN nicht in den Signaturterm zu integrieren, sondern den zweiten verschlüsselten Term VT2 zu bilden, indem die neue temporäre Identitätsgröße TMUIN der ersten Computereinheit U mit dem Sitzungsschlüssel K unter Verwendung der Verschlüsselungsfunktion Enc verschlüsselt wird. In diesem Fall weist die dritte Nachricht M3 zusätzlich den zweiten verschlüsselten Term VT2 auf.

### Drittes Ausführungsbeispiel

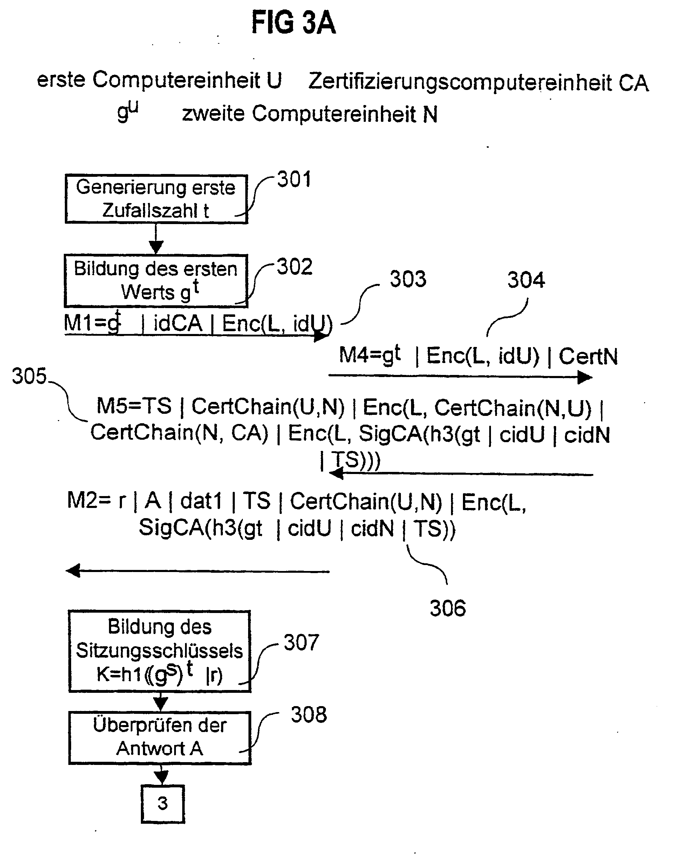

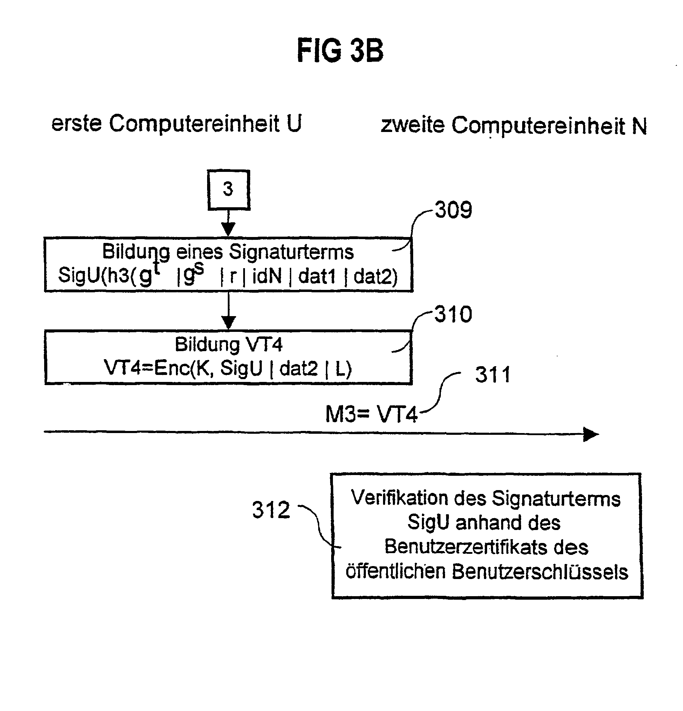

In Figur 3 ist durch eine Skizze der Ablauf eines dritten Ausführungsbeispiels dargestellt.

Für dieses Ausführungsbeispiel des Verfahrens wird vorausgesetzt, daß in der ersten Computereinheit U kein vertrauenswürdiger öffentlicher Netzschlüssel g^{s} der zweiten Computereinheit N verfügbar ist. In der ersten Computereinheit U ist ein vertrauenswürdiger öffentlicher Zertifizierungsschlüssel cs einer Zertifizierungscomputereinheit CA verfügbar. Dies bedeutet, daß die erste Computereinheit U sich den vertrauenswürdigen öffentlichen Netzschlüssel g^{s} in Form eines Netzzertifikats CertN von der Zertifizierungscomputereinheit CA "besorgen" muß. Ebenso braucht die zweite Computereinheit N den vertrauenswürdigen öffentlichen Benutzerschüssel KU in Form eines Benutzerzertifikats CertU von der Zertifizierungscomputereinheit CA.

In der ersten Computereinheit U wird die erste Zufallszahl t generiert (Schritt 301). Aus der ersten Zufallszahl t wird mit Hilfe des erzeugenden Elements g einer endlichen Gruppe in der ersten Computereinheit U der erste Wert g^{t} gebildet (Schritt 302).

Nach der Berechnung des ersten Werts g^{t} wird eine erste Nachricht M1 codiert, die mindestens den ersten Wert g^{t}, eine Identitätsgröße IMUI der ersten Computereinheit U und eine Identitätsgröße id_{CA} einer Zertifizierungscomputereinheit CA, die ein Netzzertifikat CertN liefert, das von der ersten Computereinheit U verifiziert werden kann, aufweist. Dies ist nötig, wenn mehrere Zertifizierungsinstanzen mit unterschiedlichen geheimen Zertifizierungsschlüsseln vorgesehen werden. Wenn das Sicherheitsziel der Benutzeranonymität realisiert werden soll, wird in der ersten Computereinheit U vor Bildung der ersten Nachricht M1 ein Zwischenschlüssel L gebildet. Dies geschieht durch Potenzierung des öffentlichen Schlüsselvereinbarungsschlüssels g^{U} der Zertifizierungscomputereinheit CA, der in der ersten Computereinheit U verfügbar ist, mit der ersten Zufallszahl t. Im weiteren wird in diesem Fall die Identitätsgröße IMUI der ersten Computereinheit U mit dem Zwischenschlüssel L unter Anwendung einer Verschlüsselungsfunktion Enc verschlüsselt und das Ergebnis stellt einen fünften verschlüsselten Term VT5 dar. Der fünfte verschlüsselte Term VT5 wird anstatt der Identitätsgröße IMUI der ersten Computereinheit U in die erste Nachricht M1 integriert. Die erste Nachricht M1 wird von der ersten Computereinheit U an die zweiten Computereinheit N übertragen (Schritt 303).

In der zweiten Computereinheit N wird die erste Nachricht M1 decodiert, und eine vierte Nachricht M4 gebildet (Schritt 304), die eine Verkettung des der zweiten Computereinheit N bekannten Zertifikats CertN auf den öffentlichen Netzschlüssel g^{s}, dem ersten Wert g^{t} und der Identitätsgröße IMUI der ersten Computereinheit U aufweist. In dem Fall, daß das Sicherheitsziel der Benutzeranonymität realisiert werden soll, wird in der vierten Nachricht M4 anstatt der Identitätsgröße IMUI der ersten Computereinheit U der fünfte verschlüsselte Term VT5 codiert.

Die vierte Nachricht M4 wird in der zweiten Computereinheit N codiert und anschließend an die Zertifizierungscomputereinheit CA übertragen (Schritt 304).

In der Zertifizierungscomputereinheit CA wird die vierte Nachricht M4 decodiert.

Anschließend wird, falls die Benutzeranonymität gewährleistet wird, also der fünfte verschlüsselte Term VT5 in der vierten Nachricht M4 mitgesendet wurde, in der Zertifizierungscomputereinheit CA der Zwischenschlüssel L berechnet, indem der erste Wert g^{t} mit einem geheimen Schlüsselvereinbarungsschlüssel u der Zertifizierungscomputereinheit CA potenziert wird.

Mit dem Zwischenschlüssel L wird unter Verwendung der Verschlüsselungsfunktion Enc der fünfte verschlüsselte Term VT5 entschlüsselt, womit in der Zertifizierungscomputereinheit CA die Identitätsgröße IMUI der ersten Computereinheit U bekannt ist.

In der Zertifizierungscomputereinheit CA wird dann das Benutzerzertifikat CertU ermittelt. Das Benutzerzertifikat CertU wird aus einer der Zertifizierungscomputereinheit CA eigenen Datenbank ermittelt, die alle Zertifikate der Computereinheiten enthält, für die die Zertifizierungscomputereinheit CA Zertifikate erstellt.

Um die Gültigkeit des Netzzertifikats CertN und des Benutzerzertifikats CertU zu überprüfen, wird eine Identitätsangabe id_{N} der Netzcomputereinheit N und der in der vierten Nachricht mitgesendete öffentliche Netzschlüssel g^{s}, die Identitätsgröße IMUI der ersten Computereinheit U sowie das ermittelte Benutzerzertifikat CertU mit einer Revokationsliste verglichen, in der ungültige Zertifikate, Schlüssel oder Identitätsgrößen aufgeführt sind.

Anschließend bildet die Zertifizierungscomputereinheit CA drei Ketten von Zertifikaten, eine erste Zertifikatskette CertChain(U, N), eine zweite Zertifikatskette CertChain(N, U)sowie eine dritte Zertifikatskette CertChain(N, CA).

Die erste Zertifikatskette CertChain(U, N) kann von der ersten Computereinheit U mittels des der ersten Computereinheit U bekannten öffentlichen Zertifizierungsschlüssels der Zertifizierungscomputereinheit CA verifiziert werden und enthält als letztes Glied ein Zertifikat CertN auf den öffentlichen Schlüssel g^{s} von der zweiten Computereinheit N.

Die zweite Zertifikatskette CertChain(N, U) kann von der zweiten Computereinheit N verifiziert werden und enthält als letztes Glied ein Zertifikat CertU auf den öffentlichen Schlüssel KU von der ersten Computereinheit U.

Die dritte Zertifikatskette CertChain(N, CA) kann von der zweiten Computereinheit N verifiziert werden und enthält als letztes Glied ein Zertifikat auf den öffentlichen Verifikationsschlüssels von der Zertifizierungscomputereinheit CA.

Die erste Zertifikatskette CertChain(U, N) und die zweite Zertifikatskette CertChain (N, U) können eindeutig identifiziert werden durch die Identifikatoren cidU und cidN.

Anschließend wird aus mindestens einer Verkettung des ersten Werts g^{t} und der Identifikatoren cidU und cidN ein dritter Term gebildet.

Der dritte Term wird mit Hilfe einer vierten Hash-Funktion h4 "gehasht" und das Ergebnis der Hash-Funktion h4 wird unter Verwendung einer dritten Signaturfunktion Sig_{CA} signiert.

Weiterhin wird in der Zertifizierungscomputereinheit CA ein Zeitstempel TS kreiert. Dieser findet optional Eingang in den dritten Term.

Eine in der Zertifizierungscomputereinheit CA gebildete fünfte Nachricht M5 weist mindestens eine Verkettung aus dem signierten dritten Term und den Zertifikatsketten CertChain(U, N) und CertChain(N, U) sowie optional den Zeitstempel TS und die Zertifikatskette CertChain(N, CA) auf. Optional werden der signierte Hash-Wert des dritten Terms sowie die Zertifikatskette CertChain(N, U) mit dem Zwischenschlüssel L verschlüsselt.

Die fünfte Nachricht M5 wird in der Zertifizierungscomputereinheit CA codiert und an die zweite Computereinheit N übertragen (Schritt 305). Nachdem die fünfte Nachricht M5 in der zweiten Computereinheit N decodiert ist, wird der signierte Hash-Werts des dritten Terms verifiziert, sofern er nicht mit L verschlüsselt ist.

In der zweiten Computereinheit N wird nun ein vierter Term gebildet, der mindestens eine Verkettung der Zertifikatskette CertChain(U, N) und des (optional mit dem Zwischenschlüssel L verschlüsselten) signierten Hash-Werts des dritten Terms aufweist.

In der zweiten Computereinheit N wird mit Hilfe der ersten Hash-Funktion h1 ein Sitzungsschlüssel K gebildet. Als eine erste Eingangsgröße der ersten Hash-Funktion h1 wird eine Kokatenation eines ersten Terms mit der zweiten Zufallszahl r verwendet. Der erste Term wird gebildet, indem der erste Wert g^{t} potenziert wird mit einem geheimen Netzschlüssel s. Die zweite Zufallszahl r findet Verwendung, wenn das zusätzliche Sicherheitsziel der Zusicherung der Frische (Aktualität) des Sitzungsschlüssels K für die zweiten Computereinheit N realisiert werden soll. Ist dieses Sicherheitsziel nicht benötigt, wird die zweite Zufallszahl r nicht in dem Verfahren zur Berechnung des Sitzungsschlüssels K verwendet.

In der zweiten Computereinheit N wird eine Antwort A gebildet. Zur Bildung der Antwort A sind die in dem ersten Ausführungsbeispiel beschriebenen Varianten vorgesehen.

Eine Aneinanderreihung der zweiten Zufallszahl r, des vierten Terms, der Antwort A, sowie eines optionalen ersten Datenfeldes dat1 und des optionalen Zeitstempels bilden eine zweite Nachricht M2. Das optionale erste Datenfeld dat1 ist nur in der zweiten Nachricht M2 enthalten, wenn dies in dem Verfahren vorgesehen wird.

Die zweite Nachricht M2 wird in der zweiten Computereinheit N codiert und zu der ersten Computereinheit U übertragen (Schritt 306).

In der ersten Computereinheit U wird die zweite Nachricht M2 decodiert, so daß die ersten Computereinheit U die zweite Zufallszahl r, die Antwort A sowie eventuell das optionale erste Datenfeld dat1 und eventuell den Zeitstempel TS zur Verfügung hat. Die Länge des optionalen ersten Datenfeldes dat1 kann beliebig groß sein, d.h. es ist auch möglich, daß das optionale erste Datenfeld dat1 nicht vorhanden ist.

In der ersten Computereinheit U wird nun ebenfalls der Sitzungsschlüssel K gebildet (Schritt 307), mit Hilfe der ersten Hash-Funktion h1, die sowohl der zweiten Computereinheit N als auch der ersten Computereinheit.U bekannt ist. Eine zweite Eingangsgröße der ersten Hash-Funktion h1 zur Bildung des Sitzungsschlüssels K in der ersten Computereinheit U weist mindestens einen zweiten Term auf. Der zweite Term wird gebildet aus einer Exponentation eines öffentlichen Netzschlüssels g^{s} mit der ersten Zufallszahl t. Wenn die zweite Zufallszahl r in dem Verfahren zur Berechnung des Sitzungsschlüssels K vorgesehen wird, so weist die zweite Eingangsgröße der ersten Hash-Funktion h1 zur Bildung des Sitzungsschlüssels K in der ersten Computereinheit U zusätzlich die zweite Zufallszahl r auf.

Nachdem in der ersten Computereinheit U der Sitzungsschlüssel K gebildet wurde, wird anhand der empfangenen Antwort A überprüft, ob der in der ersten Computereinheit U gebildete Sitzungsschlüssel K mit dem Sitzungsschlüssel K, der in der zweiten Computereinheit N gebildet wurde, übereinstimmt (Schritt 308).

Abhängig von den im vorigen beschriebenen Varianten zur Bildung der Antwort A sind die oben beschriebenen Möglichkeiten vorgesehen, den Sitzungsschlüssel K anhand der Antwort A zu überprüfen.

Dadurch, daß bei der Berechnung des Sitzungsschlüssels K in der zweiten Computereinheit N der geheime Netzschlüssel s und bei der Berechnung des Sitzungsschlüssels K in der ersten Computereinheit U der öffentliche Netzschlüssel g^{s} verwendet werden, wird die zweiten Computereinheit N durch die ersten Computereinheit U authentifiziert. Dies wird erreicht, vorausgesetzt daß für die erste Computereinheit U bekannt ist, daß der öffentliche Netzschlüssel g^{s} tatsächlich zur zweiten Computereinheit N gehört. Letzteres wird von U erreicht durch die Verifikation der Zertifikatskette CertChain(U, N) sowie des signierten Hashwerts des dritten Terms. Ist letzterer mit dem Zwischenschlüssel L verschlüsselt, muß er vor der Verifikation mit dem Zwischenschlüssel L entschlüsselt werden.

Im Anschluß an die Bestätigung des Sitzungsschlüssels K durch Überprüfung der Antwort A wird ein Signaturterm berechnet (Schritt 309). Hierzu wird mit Hilfe einer dritten Hash-Funktion h3 eine vierte Eingangsgröße gebildet. Die dritte Hash-Funktion h3 kann, muß aber nicht dieselbe Hash-Funktion sein wie die erste Hash-Funktion h1 und/oder die zweite Hash-Funktion h2. Als eine dritte Eingangsgröße für die dritte Hash-Funktion h3 wird ein Term verwendet, der eine oder weitere Größen aufweist, aus denen auf den Sitzungsschlüssel eindeutig rückgeschlossen werden kann. Weiterhin kann die dritte Eingangsgröße das optionale erste Datenfeld dat1 oder auch ein optionales zweites Datenfeld dat2 enthalten, wenn deren Verwendung in dem Verfahren vorgesehen wird.

Solche Größen sind der erste Wert g^{t}, der öffentliche Netzschlüssel g^{s} sowie die zweite Zufallszahl r.

Es kann später nicht abgestritten werden, daß die Daten, die im ersten optionale Datenfeld dat1 und im zweiten optionalen Datenfeld dat2 enthalten sind, von der ersten Computereinheit U gesendet werden.

Die in dem ersten optionalen Datenfeld dat1 und in dem zweiten optionalen Datenfeld dat2 enthaltenen Daten können Telefonnummern, die aktuelle Zeit oder ähnliche hierfür geeignete Parameter sein. Diese Information kann als Werkzeug für eine unanfechtbare Gebührenabrechnung verwendet werden.

Unter Verwendung einer ersten Signaturfunktion Sig_{U} wird der Signaturterm aus mindestens der vierten Eingangsgröße gebildet. Um einen höheren Sicherheitsgrad zu erzielen, kann der Signaturterm verschlüsselt werden. Der Signaturterm wird in diesem Fall mit dem Sitzungsschlüssel K unter Verwendung der Verschlüsselungsfunktion Enc verschlüsselt und bildet den ersten verschlüsselten Term VT1.

Bei Verwendung eines optionalen zweiten Datenfeldes dat2 wird in der ersten Computereinheit U ein dritter verschlüsselter Term VT3 berechnet, indem das optionale zweite Datenfeld dat2 mit dem Sitzungsschlüssel K unter Verwendung der Verschlüsselungsfunktion Enc verschlüsselt wird. Das optionale zweite Datenfeld dat2 kann auch unverschlüsselt, also im Klartext übertragen werden.

Alternativ zur Bildung des ersten und des dritten verschlüsselten Terms VT1 und VT3 kann auch ein vierter verschlüsselten Term VT4 gebildet werden, indem mindestens die Verkettung des Signaturterms sowie optional des Datenfeldes dat2 und des Zwischenschlüssels L mit dem Sitzungsschlüssel K verschlüsselt wird (Schritt 310).
In der ersten Computereinheit U wird eine dritte Nachricht M3 gebildet und codiert, die mindestens aus dem ersten verschlüsselten Term VT1, und, wenn das optionale zweite Datenfeld dat2 verwendet wird, dem dritten verschlüsselten Term VT3 oder dem optionalen zweiten Datenfeld dat2 im Klartext, oder aber aus dem vierten verschlüsselten Term VT4 besteht.

Die dritte Nachricht M3 wird von der ersten Computereinheit U zu der zweiten Computereinheit N übertragen (Schritt 311).

In der zweiten Computereinheit N wird die dritte Nachricht M3 decodiert und anschließend wird der erste verschlüsselte Term VT1 sowie eventuell der dritte verschlüsselte Term VT3, oder aber der vierte verschlüsselte Term VT4 entschlüsselt. Wurden Teile der Nachricht M5 mit L verschlüsselt, so kann nun die zweite Computereinheit N mit Hilfe des in Nachricht M3 empfangenen Zwischenschlüssels L die verschlüsselten Teile der Nachricht M5 entschlüsseln. Daraufhin kann die zweite Computereinheit N die zweite Zertifikatskette Cert(N, U) sowie den signierten Hashwert des dritten Terms unter Anwendung des öffentlichen Verifikationsschlüssels von CA verifizieren. Anhand des Benuterzertifikats CertU, das der zweiten Computereinheit N nun zur Verfügung steht, wird der Signaturterm verifiziert.

Zusätzlich wird die Authentifikation der ersten Computereinheit U gegenüber der zweiten Computereinheit N durch den Signaturterm in der dritten Nachricht M3 gewährleistet, der die Zufallszahl r enthält, durch deren Verwendung auch garantiert wird, daß die dritte Nachricht M3 tatsächlich aktuell von der ersten Computereinheit U gesendet wurde.

Wenn für das Verfahren temporäre Benutzeridentitäten vorgesehen werden, so wird das im vorigen beschriebene Verfahren um einige Verfahrensschritte erweitert.

In der zweiten Computereinheit N wird für die erste Computereinheit U eine neue temporäre Identitätsgröße TMUIN gebildet, die der ersten Computereinheit U im weiteren zugewiesen wird. Dies kann z. B. durch Generierung einer Zufallszahl oder durch Tabellen, in denen mögliche Identitätsgrößen abgespeichert sind, durchgeführt werden. Aus der neuen temporären Identitätsgröße TMUIN der ersten Computereinheit U wird in der zweiten Computereinheit N ein fünfter verschlüsselter Term VT5 gebildet, indem die neue temporäre Identitätsgröße TMUIN der ersten Computereinheit U mit dem Sitzungsschlüssel K unter Verwendung der Verschlüsselungsfunktion Enc verschlüsselt wird.

In diesem Fall weist die zweite Nachricht M2 zusätzlich mindestens den fünften verschlüsselten Term VT5 auf. Der fünfte verschlüsselte Term VT5 wird dann in der ersten Computereinheit U entschlüsselt. Nun ist die neue temporäre Identitätsgröße TMUIN der ersten Computereinheit U in der ersten Computereinheit U verfügbar.

Damit der zweiten Computereinheit N auch gewährleistet wird, daß die erste Computereinheit U die neue temporäre Identitätsgröße TMUIN korrekt empfangen hat, weist die dritte Eingangsgröße für die erste Hash-Funktion h1 oder für die zweite Hash-Funktion h2 zusätzlich mindestens die neue temporäre Identitätsgröße TMUIN der ersten Computereinheit U auf.

Im weiteren werden einige Alternativen der oben beschriebenen Ausführungsbeispiele aufgezeigt:

Die Erfindung beschränkt sich nicht auf ein Mobilfunksystem und somit auch nicht auf einen Benutzer eines Mobilfunksystems und das Netz, sondern kann in allen Bereichen angewendet werden, in denen ein kryptographischer Schlüsselaustausch zwischen zwei Kommunikationspartnern benötigt wird. Dies kann z.B. in einer Kommunikationsbeziehung zwischen zwei Rechnern, die Daten in verschlüsselter Form austauschen wollen, der Fall sein. Ohne Beschränkung der Allgemeingültigkeit wurde oben ein erster Kommunikationspartner als erste Computereinheit U und ein zweiter Kommunikationspartner als zweite Computereinheit N bezeichnet.

Im Rahmen dieses Dokuments wurden folgende Veröffentlichungen zitiert:
[1] A. Aziz, W. Diffie, "Privacy and Authentication for Wireless Local Area Networks", IEEE Personal Communications, 1994, S. 25 bis 31
[2] M. Beller, "Proposed Authentication and Key Agreement Protocol for PCS", Joint Experts Meeting on Privacy and Authentication for Personal Communications, P&A JEM 1993, 1993, S. 1 bis 11
[3] C. Carroll, Y. Frankel, Y. Tsiounis, "Efficient key distribution for slow computing devices", Conference Security&Privacy, Oakland, 1998
[4] J. Zhou, K. Lam, "Undeniable billing in mobile communications", preprint 1998
[5] US 5 214 700
[6] DE-Broschüre: Telesec. Telekom, Produktentwicklung Telesec beim Fernmeldeamt Siegen, S. 12-13
[7] US 5 222 140
[8] US 5 153 919
[9] M. Beller et al, Privacy and Authentication on a Portable Communication System, IEEE Journal on Selected Areas in Communications, Vol. 11, No. 6, S. 821-829, 1993
[10] DE 195 18 5465 C1
[11] W. Diffie, P. C. van Oorschot, M. Wiener, "Authentication and authenticated key exchanges", Designs, Codes and Cryptography, Vol. 2, S. 107-125, 1992.

## Patentansprüche

1. Verfahren zum rechnergestützten Austausch kryptographischer Schlüssel zwischen einer ersten Computereinheit (U) und einer zweiten Computereinheit (N),
- bei dem aus einer ersten Zufallszahl (t) mit Hilfe eines erzeugenden Elements einer endlichen Gruppe in der ersten Computereinheit (U) ein erster Wert (g^{t}) gebildet wird,
- bei dem eine erste Nachricht (M1) von der ersten Computereinheit (U) an die zweite Computereinheit (N) übertragen wird, wobei die erste Nachricht (M1) mindestens den ersten Wert (g^{t}) aufweist,
- bei dem in der zweiten Computereinheit (N) ein Sitzungsschlüssel (K) mit Hilfe einer ersten Hash-Funktion (h1) gebildet wird, wobei eine erste Eingangsgröße der ersten Hash-Funktion (h1) mindestens einen ersten Term aufweist, der gebildet wird durch eine Exponentiation des ersten Werts (g^{t}) mit einem geheimen Netzschlüssel (s),
- bei dem in der ersten Computereinheit (U) der Sitzungsschlüssel (K) gebildet wird mit Hilfe der ersten Hash-Funktion (h1), wobei eine zweite Eingangsgröße der ersten Hash-Funktion (h1) mindestens einen zweiten Term aufweist, der gebildet wird durch eine Exponentiation eines öffentlichen Netzschlüssels (g^{s}) mit der ersten Zufallszahl (t),
- bei dem von der zweiten Computereinheit (N) an die erste Computereinheit (U) Größen übertragen werden, welche zur Überprüfung des Sitzungsschlüssels (K) in der ersten Computereinheit (U) verwendet werden,
- bei dem in der ersten Computereinheit (U) mit Hilfe einer zweiten Hash-Funktion oder der ersten Hash-Funktion (h1) eine vierte Eingangsgröße gebildet wird, wobei eine dritte Eingangsgröße für die erste Hash-Funktion (h1) oder für die zweite Hash-Funktion zur Bildung der vierten Eingangsgröße eine oder weitere Größen aufweist, aus denen auf den Sitzungsschlüssel eindeutig rückgeschlossen werden kann, wobei zumindest ein Teil der Größe oder Größen eine nicht öffentliche Größe ist,
- bei dem in der ersten Computereinheit (U) ein Signaturterm aus mindestens der vierten Eingangsgröße gebildet wird unter Anwendung einer ersten Signaturfunktion (Sig_{U}),
- bei dem eine zweite Nachricht (M3) von der ersten Computereinheit (U) an die zweite Computereinheit (N) übertragen wird, wobei die zweite Nachricht (M3) mindestens den Signaturterm der ersten Computereinheit (U) aufweist, und
- bei dem in der zweiten Computereinheit (N) der Signaturterm verifiziert wird.

2. Verfahren nach Anspruch 1,
bei dem der geheime Netzschlüssel und/oder der öffentliche Netzschlüssel langlebige Schlüssel ist/sind.

3. Verfahren nach Anspruch 1 oder 2,
bei dem die dritte Eingangsgröße mehrere Größen aufweist, aus denen auf den Sitzungsschlüssel eindeutig rückgeschlossen werden kann.

4. Verfahren nach einem der Ansprüche 1 bis 3,
bei dem die Größe bzw. die Größen, welche von der dritten Eingangsgröße erfasst werden, mindestens zumindest den ersten Wert (g^{t}) und/oder den öffentlichen Netzschlüssel (g^{s}) enthält bzw. enthalten.

5. Verfahren nach einem der Ansprüche 1 bis 4,
- bei dem die erste Nachricht (M1) eine Identitätsangabe (id_{CA}) einer Zertifizierungscomputereinheit (CA), die ein Netzzertifikat (CertN) oder eine Kette von Zertifikaten, deren letztes das Netzzertifikat (CertN) ist, liefert, das oder die von der ersten Computereinheit (U) verifiziert werden kann, aufweist,
- bei dem eine dritte Nachricht (M2) von der zweiten Computereinheit (N) an die erste Computereinheit (U) übertragen wird, wobei die dritte Nachricht (M2) mindestens das Netzzertifikat (CertN) oder die Kette von Zertifikaten, deren letztes das Netzzertifikat (CertN) ist, aufweist, und
- bei dem in der ersten Computereinheit (U) das Netzzertifikat (CertN) oder die Kette von Zertifikaten, deren letztes das Netzzertifikat (CertN) ist, verifiziert wird.

6. Verfahren nach Anspruch 5,
- bei dem eine zweite Nachricht (M3) von der ersten Computereinheit (U) an die zweite Computereinheit (N) übertragen wird, wobei die zweite Nachricht (M3) ein Benutzerzertifikat (CertU) oder eine Kette von Zertifikaten, deren letztes das Benutzerzertifikat (CertU) ist, aufweist,
- bei dem in der zweiten Computereinheit (N) das Benutzerzertifikat (CertU) oder die Kette von Zertifikaten, deren letztes das Benutzerzertifikat (CertU) ist, verifiziert wird.

7. Verfahren nach einem der Ansprüche 1 bis 6,
- bei dem die erste Nachricht (M1) eine Identitätsgröße (I-MUI) der ersten Computereinheit (U) und eine Identitätsangabe (id_{CA}) einer Zertifizierungscomputereinheit (CA), die der ersten Computereinheit (U) ein Netzzertifikat (CertN) liefert, das von der ersten Computereinheit (U) verifiziert werden kann, aufweist,
- bei dem eine vierte Nachricht (M4) von der zweiten Computereinheit (N) an die Zertifizierungscomputereinheit (CA) übertragen wird, wobei die vierte Nachricht (M4) mindestens den ersten Wert (g^{t}) als Eingangsgröße aufweist,
- bei dem eine fünfte Nachricht (M5), die mindestens das Netzzertifikat (CertN) oder eine Zertifikatskette, deren letztes Glied das Netzzertifikat (CertN) ist, oder das Benutzerzertifikat (CertU) oder eine Zertifikatskette, deren letztes Glied das Benutzerzertifikat (CertU) ist, aufweist, von der Zertifizierungscomputereinheit (CA) zu der zweiten Computereinheit (N) übertragen wird,

8. Verfahren nach einem der Ansprüche 1 bis 7,
- bei dem eine vierte Nachricht (M4) von der zweiten Computereinheit (N) an die Zertifizierungscomputereinheit (CA) übertragen wird, wobei die vierte Nachricht (M4) mindestens den öffentlichen Netzschlüssel (g^{s}), den ersten Wert (g^{t}), die Identitätsgröße (IMUI) der ersten Computereinheit (U) als Eingangsgröße aufweist und wobei eine Ausgangsgröße einer dritten Hash-Funktion (h3) unter Verwendung einer zweiten Signaturfunktion (Sig_{N}) signiert wird,
- bei dem in der Zertifizierungscomputereinheit (CA) der erste signierte Term verifiziert wird,
- bei dem in der Zertifizierungscomputereinheit (CA) ein dritter Term gebildet wird, der mindestens den ersten Wert (g^{t}), den öffentlichen Netzschlüssel (g^{s}) und eine Identitätsangabe (id_{N}) der zweiten Computereinheit (N) aufweist,
- bei dem in der Zertifizierungscomputereinheit (CA) unter Verwendung einer vierten Hash-Funktion (h4) ein Hash-Wert über den dritten Term gebildet wird,
- bei dem in der Zertifizierungscomputereinheit (CA) der Hash-Wert über den dritten Term unter Verwendung einer dritten Signaturfunktion (Sig_{cA}) signiert wird,
- bei dem in der Zertifizierungscomputereinheit (CA) ein Netzzertifikat (CertN) gebildet wird, das mindestens den dritten Term und den signierten Hash-Wert des dritten Terms aufweist,
- bei dem in der Zertifizierungscomputereinheit (CA) auf einen fünften Term der mindestens die Identitätsangabe (id_{N}) der zweiten Computereinheit (N) und ein Benutzerzertifikat (CertU) aufweist, eine vierte Hash-Funktion (h4) angewendet wird,
- bei dem der Hash-Wert des fünften Terms durch Verwendung der dritten Signaturfunktion (Sig_{CA}) mit dem geheimen Zertifizierungsschlüssel (cs) signiert und das Ergebnis den zweiten signierten Term darstellt,
- bei dem eine fünfte Nachricht (M5), die mindestens das Netzzertifikat (CertN), den fünften Term und den zweiten signierten Term aufweist, von der Zertifizierungscomputereinheit (CA) zu der zweiten Computereinheit (N) übertragen wird,
- bei dem in der zweiten Computereinheit (N) das Netzzertifikat (CertN) und der zweite signierte Term verifiziert werden,
- bei dem in der zweiten Computereinheit (N) ein vierter Term, der mindestens den öffentlichen Netzschlüssel (g^{s}) und den signierten Hash-Wert des dritten Terms aufweist, gebildet wird,
- bei dem eine dritte Nachricht (M2) von der zweiten Computereinheit (N) an die erste Computereinheit (U) übertragen wird, wobei die dritte Nachricht (M2) mindestens den vierten Term aufweist, und
- bei dem in der ersten Computereinheit (U) das Netzzertifikat (CertN) verifiziert wird.

9. Verfahren nach einem der Ansprüche 1 bis 8,
- bei dem die erste Nachricht (M1) eine Identitätsgröße (I-MUI) der ersten Computereinheit (U) und eine Identitätsangabe (id_{CA}) einer Zertifizierungscomputereinheit (CA), die der ersten Computereinheit (U) ein Netzzertifikat (CertN) oder eine Kette von Zertifikaten, deren letztes das Netzzertifikat (CertN) ist, liefert, das oder die von der ersten Computereinheit (U) verifiziert werden kann oder können, aufweist,
- bei dem eine vierte Nachricht (M4) von der zweiten Computereinheit (N) an die Zertifizierungscomputereinheit (CA) übertragen wird, wobei die vierte Nachricht (M4) mindestens ein Zertifikat auf den öffentlichen Netzschlüssel (g^{s}), den ersten Wert (g^{t}) und die Identitätsgröße (IMUI) der ersten Computereinheit (U) aufweist,
- bei dem in der Zertifizierungscomputereinheit (CA) ein dritter Term gebildet wird, der mindestens den öffentlichen Netzschlüssel (g^{s})oder eine Größe, die den öffentlichen Netzschlüssel (g^{s}) eindeutig bestimmt, aufweist,
- bei dem in der Zertifizierungscomputereinheit (CA) unter Verwendung einer vierten Hash-Funktion (h4) ein Hash-Wert über den dritten Term gebildet wird,
- bei dem in der Zertifizierungscomputereinheit (CA) der Hash-Wert über den dritten Term unter Verwendung einer dritten Signaturfunktion (Sig_{cA}) signiert wird,
- bei dem eine fünfte Nachricht (M5), die mindestens den signierten Hash-Wert über den dritten Term aufweist, von der Zertifizierungscomputereinheit (CA) zu der zweiten Computereinheit (N) übertragen wird,
- bei dem in der zweiten Computereinheit (N) der signierte Hash-Wert über den dritten Term verifiziert wird,
- bei dem eine dritte Nachricht (M2) von der zweiten Computereinheit (N) an die erste Computereinheit (U) übertragen wird, wobei die dritte Nachricht (M2) mindestens den signierten Hash-Wert über den dritten Term aufweist, und
- bei dem in der ersten Computereinheit (U) der signierte Hash-Wert über den dritten Term verifiziert wird.

10. Verfahren nach Anspruch 9,
bei dem der dritte Term einen öffentlichen Benutzersignaturschlüssel (KU) oder eine Größe, die den Benutzersignaturschlüssel (KU)eindeutig bestimmt, aufweist.

11. Verfahren nach Anspruch 9 oder 10,
bei dem die fünfte Nachricht (M5) sowie die dritte Nachricht (M2) mindestens eine Kette von Zertifikaten aufweist.

12. Verfahren nach Anspruch 8,
bei dem der fünfte Term einen Zeitstempel (TS) aufweist.

13. Verfahren nach einem der Ansprüche 9 bis 12,
bei dem der dritte Term einen Zeitstempel (TS) aufweist.

14. Verfahren nach einem der Ansprüche 7 bis 13,
- bei dem in der ersten Computereinheit (U) vor Bildung der ersten Nachricht (M1) ein Zwischenschlüssel (L) gebildet wird, indem ein öffentlicher Schlüsselvereinbarungsschlüssel (g^{u}) mit der ersten Zufallszahl (t) potenziert wird,
- bei dem in der ersten Computereinheit (U) vor Bildung der ersten Nachricht (M1) aus der Identitätsgröße (IMUI) der ersten Computereinheit (U) ein zweiter verschlüsselter Term (VT2) gebildet wird, indem die Identitätsgröße (IMUI) mit dem Zwischenschlüssel (L) unter Anwendung einer Verschlüsselungsfunktion (Enc) verschlüsselt wird,
- bei dem die erste Nachricht (M1) anstatt der Identitätsgröße (IMUI) der ersten Computereinheit(U) den zweiten verschlüsselten Term (VT2) aufweist,
- bei dem die vierte Nachricht (M4) anstatt der Identitätsgröße (IMUI) der ersten Computereinheit(U) den zweiten verschlüsselten Term (VT2) aufweist.

15. Verfahren nach einem der Ansprüche 7 bis 14,
bei dem in der fünften Nachricht (M5) das Netzzertifikat (CertN) oder eine Zertifikatskette, deren letztes Glied das Netzzertifikat (CertN) ist, oder das Benutzerzertifikat (CertU) oder eine Zertifikatskette, deren letztes Glied das Benutzerzertifikat (CertU) ist, mit L verschlüsselt ist.

16. Verfahren nach einem der Ansprüche 7 bis 15,
bei dem in der Zertifizierungscomputereinheit (CA) mindestens eine der Größen, die Identitätsangabe (id_{N}) der zweiten Computereinheit (N), die Identitätsgröße (IMUI)der ersten Computereinheit (U), der öffentliche Netzschlüssel (g^{s}), das Netzzertifikat (CertN) oder das Benutzerzertifikat (CertU) anhand einer Revokationsliste überprüft wird.

17. Verfahren nach einem der Ansprüche 1 bis 16,
- bei dem die erste Nachricht (M1) mindestens eine alte temporäre Identitätsgröße der ersten Computereinheit (U) aufweist,
- bei dem in der zweiten Computereinheit (N), nachdem die erste Nachricht (M1) empfangen wurde und bevor die dritte Nachricht (M2) gebildet wird, für die erste Computereinheit (U) eine neue temporäre Identitätsgröße gebildet wird,
- bei dem aus der neuen temporären Identitätsgröße (TMUIN) der ersten Computereinheit (U) ein fünfter verschlüsselter Term (VT5) gebildet wird, in dem die neue temporäre Identitätsgröße der ersten Computereinheit (U) mit dem Sitzungschlüssel (K) unter Anwendung der Verschlüsselungsfunktion (Enc) verschlüsselt wird,
- bei dem die dritte Nachricht (M2) mindestens den fünften verschlüsselten Term (VT5) aufweist,
- bei dem in der ersten Computereinheit (U), nachdem die dritte Nachricht (M2) empfangen wurde und bevor die vierte Eingangsgröße gebildet wird, der fünfte verschlüsselte Term (VT5) entschlüsselt wird,
- bei dem die dritte Eingangsgröße für die erste Hash-Funktion (h1) oder für die zweite Hash-Funktion (h2) zur Bildung der vierten Eingangsgröße mindestens die neue temporäre Identitätsgröße (TMUIN) der ersten Computereinheit (U) aufweist, und
- bei dem die zweite Nachricht (M3) nicht die Identitätsgröße (IMUI) der ersten Computereinheit (U) aufweist.

18. Verfahren nach einem der Ansprüche 1 bis 17,
- bei dem in der zweiten Computereinheit (N) eine Information zu dem Sitzungsschlüssel (K) enthaltende Antwort (A) gebildet wird,
- bei dem eine dritte Nachricht (M2) von der zweiten Computereinheit (N) an die erste Computereinheit (U) übertragen wird, wobei die dritte Nachricht (M2) mindestens die Antwort (A) aufweist, und
- bei dem in der ersten Computereinheit (U) der Sitzungsschlüssel (K) anhand der Antwort (A) überprüft wird.

19. Verfahren nach einem der Ansprüche 1 bis 18,
bei dem die zweite Nachricht (M3) eine Identitätsgröße (IMUI) der ersten Computereinheit (U) aufweist.

20. Verfahren nach einem der Ansprüche 1 bis 19,
- bei dem in der zweiten Computereinheit (N) die erste Eingangsgröße der ersten Hash-Funktion (h1) mindestens eine zweite Zufallszahl (r) aufweist,
- bei dem eine dritte Nachricht (M2) die zweite Zufallszahl (r) aufweist, und
- bei dem in der ersten Computereinheit (U) die zweite Eingangsgröße der ersten Hash-Funktion (h1) mindestens die zweite Zufallszahl (r) aufweist.

21. Verfahren nach einem der Ansprüche 1 bis 20, bei dem die Größe bzw. die Größen , welche von der dritten Eingangsgröße erfasst werden, die zweite Zufallszahl (r) enthält bzw. enthalten. <

22. Verfahren nach einem der Ansprüche 1 bis 21,
- bei dem in der ersten Computereinheit (U) vor Bildung der zweiten Nachricht (M3) aus der Identitätsgröße (IMUI) der ersten Computereinheit (U) ein zweiter verschlüsselter Term (VT2) gebildet wird, in dem mindestens die Identitätsgröße (IMUI) mit dem Sitzungsschlüssel (K) unter Anwendung der Verschlüsselungsfunktion (Enc) verschlüsselt wird,
- bei dem die zweite Nachricht (M3) den zweiten verschlüsselten Term (VT2) aufweist, und
- bei dem in der zweiten Computereinheit (N), nachdem die zweite Nachricht (M3) empfangen wurde, der zweite verschlüsselte Term (VT2) entschlüsselt wird.

23. Verfahren nach einem der Ansprüche 1 bis 22,
- bei dem eine dritte Nachricht (M2) ein optionales erstes Datenfeld (dat1) aufweist und
- bei dem die dritte Eingangsgröße für die erste Hash-Funktion (h1) oder für die zweite Hash-Funktion (h2) zur Bildung der vierten Eingangsgröße mindestens das optionale erste Datenfeld (dat1) aufweist.

24. Verfahren nach einem der Ansprüche 1 bis 23,
- bei dem in der ersten Computereinheit (U) vor Bildung der zweiten Nachricht (M3) ein dritter verschlüsselter Term (VT3) gebildet wird, indem mindestens ein optionales zweites Datenfeld (dat2) mit dem Sitzungsschlüssel (K) unter Anwendung der Verschlüsselungsfunktion (Enc) verschlüsselt wird,
- bei dem die zweite Nachricht (M3) mindestens den dritten verschlüsselten Term (VT3) aufweist, und
- bei dem in der zweiten Computereinheit (N), nachdem die zweite Nachricht (M3) empfangen wurde, der dritte verschlüsselte Term (VT3) entschlüsselt wird.

25. Verfahren nach einem der Ansprüche 1 bis 24,
- bei dem in der ersten Computereinheit (U) vor Bildung der zweiten Nachricht (M3) ein erster verschlüsselter Term (VT1) gebildet wird, indem mindestens der Signaturterm unter Anwendung der Verschlüsselungsfunktion (Enc) verschlüsselt wird,
- bei dem die zweite Nachricht (M3) den ersten verschlüsselten Term (VT1) aufweist, und
- bei dem in der zweiten Computereinheit (N), nachdem die zweite Nachricht (M3) empfangen wurde und bevor der Signaturterm verifiziert wird, der erste verschlüsselte Term (VT1) entschlüsselt wird.

26. Verfahren nach einem der Ansprüche 1 bis 25,
bei dem in der zweiten Computereinheit (N) eine Antwort (A) gebildet wird, indem eine Konstante (const), sowie eventuell weitere Größen, die in der zweiten Computereinheit (N) und in der ersten Computereinheit (U) bekannt sind, mit dem Sitzungsschlüssel (K) unter Anwendung der Verschlüsselungsfunktion (Enc) verschlüsselt werden.

27. Verfahren nach einem der Ansprüche 1 bis 26,
bei dem in der ersten Computereinheit (U) die Antwort (A) überprüft wird, indem eine Konstante (const), sowie eventuell weitere Größen, mit dem Sitzungsschlüssel (K) unter Anwendung der Verschlüsselungsfunktion (Enc) verschlüsselt wird und das Ergebnis mit der Antwort (A) verglichen wird.

28. Verfahren nach einem der Ansprüche 1 bis 26,
bei dem in der ersten Computereinheit (U) die Antwort (A) überprüft wird, indem die Antwort (A) mit dem Sitzungsschlüssel (K) unter Anwendung der Verschlüsselungsfunktion (Enc) entschlüsselt wird und eine entschlüsselte Konstante (const') mit einer Konstante (const), sowie eventuell weiteren Größen, verglichen wird.

29. Verfahren nach einem der Ansprüche 1 bis 28,
- bei dem in der zweiten Computereinheit (N) eine Antwort (A) gebildet wird, indem eine dritte Hash-Funktion (h3) angewendet wird auf eine Eingangsgröße, die mindestens den Sitzungsschlüssel (K) aufweist, und
- bei dem in der ersten Computereinheit (U) die Antwort (A) überprüft wird, indem die dritte Hash-Funktion (h3) angewendet wird auf die Eingangsgröße, die mindestens den Sitzungsschlüssel (K) aufweist, und das Ergebnis mit der Antwort (A) verglichen wird.

30. Verfahren nach einem der Ansprüche 1 bis 29,
bei dem die zweite Nachricht (M3) mindestens ein optionales zweites Datenfeld (dat2) aufweist.

31. Verfahren nach einem der Ansprüche 1 bis 30,
bei dem die erste Computereinheit (U) durch ein mobiles Kommunikationsendgerät und/oder die zweite Computereinheit (N) durch eine Authentifizierungseinheit in einem Mobil-Kommunikationsnetz gebildet wird/werden.

32. Anordnung zum rechnergestützten Austausch kryptographischer Schlüssel zwischen einer ersten Computereinheit (U) und einer zweiten Computereinheit (N), bei der die erste Computereinheit (U) und die zweite Computereinheit (N) derart eingerichtet sind, daß folgende Verfahrensschritte durchführbar sind:
- aus einer ersten Zufallszahl (t) wird mit Hilfe eines erzeugenden Elements einer endlichen Gruppe in der ersten Computereinheit (U) ein erster Wert (g^{t}) gebildet,
- eine erste Nachricht (M1) wird von der ersten Computereinheit (U) an die zweite Computereinheit (N) übertragen, wobei die ersten Nachricht (M1) mindestens den ersten Wert (g^{t}) aufweist,
- in der zweiten Computereinheit (N) wird ein Sitzungsschlüssel (K) mit Hilfe einer ersten Hash-Funktion (h1) gebildet, wobei eine erste Eingangsgröße der ersten Hash-Funktion (h1) mindestens einen ersten Term aufweist, der gebildet wird durch eine Exponentiation des ersten Werts (g^{t}) mit einem geheimen Netzschlüssel (s),
- in der ersten Computereinheit (U) wird der Sitzungsschlüssel (K) gebildet mit Hilfe der ersten Hash-Funktion (h1), wobei eine zweite Eingangsgröße der ersten Hash-Funktion (h1) mindestens einen zweiten Term aufweist, der gebildet wird durch eine Exponentiation eines öffentlichen Netzschlüssels (g^{s}) mit der ersten Zufallszahl (t),
- von der zweiten Computereinheit (N) werden Größen an die erste Computereinheit (U) übertragen, welche zur Überprüfung des Sitzungsschlüssels (K) in der ersten Computereinheit (U) verwendet werden,
- in der ersten Computereinheit (U) wird mit Hilfe einer zweiten Hash-Funktion oder der ersten Hash-Funktion (h1) eine vierte Eingangsgröße gebildet wird, wobei eine dritte Eingangsgröße für die erste Hash-Funktion (h1) oder für die zweite Hash-Funktion zur Bildung der vierten Eingangsgröße eine oder weitere Größen aufweist, aus denen auf den Sitzungsschlüssel eindeutig rückgeschlossen werden kann, wobei zumindest ein Teil der Größe oder Größen eine nicht öffentliche Größe ist,
- in der ersten Computereinheit (U) wird ein Signaturterm aus mindestens der vierten Eingangsgröße gebildet unter Anwendung einer ersten Signaturfunktion (Sig_{U}),
- eine zweite Nachricht (M3) wird von der ersten Computereinheit (U) an die zweite Computereinheit (N) übertragen, wobei die zweite Nachricht (M3) mindestens den Signaturterm der ersten Computereinheit (U) aufweist, und
- in der zweiten Computereinheit (N) wird der Signaturterm verifiziert.

33. Anordnung nach Anspruch 31,
bei dem der geheime Netzschlüssel und/oder der öffentliche Netzschlüssel langlebige Schlüssel ist/sind.

34. Anordnung nach Anspruch 32 oder 33,
bei der die erste Computereinheit (U) und die zweite Computereinheit (N) derart eingerichtet sind, daß die dritte Eingangsgröße mehrere Größen aufweist, aus denen auf den Sitzungsschlüssel eindeutig rückgeschlossen werden kann.

35. Anordnung nach einem der Ansprüche 32 bis 34,
bei der die erste Computereinheit (U) und die zweite Computereinheit (N) derart eingerichtet sind, daß die Größe bzw. die Größen, welche von der dritten Eingangsgröße umfasst werden, mindestens zumindest den ersten Wert (g^{t}) und/oder den öffentlichen Netzschlüssel (g^{s}) enthält bzw. enthalten.

36. Anordnung nach einem der Ansprüche 32 bis 35,
bei der die.erste Computereinheit (U) und die zweite Computereinheit (N) derart eingerichtet sind, daß folgende Verfahrensschritte durchführbar sind:
- die erste Nachricht (M1) weist eine Identitätsangabe (id_{CA}) einer Zertifizierungscomputereinheit (CA), die ein Netzzertifikat (CertN) oder eine Kette von Zertifikaten, deren letztes das Netzzertifikat (CertN) ist, liefert, das oder die von der ersten Computereinheit (U) verifiziert werden kann, auf,
- eine dritte Nachricht (M2) wird von der zweiten Computereinheit (N) an die erste Computereinheit (U) übertragen, wobei die dritte Nachricht (M2) mindestens das Netzzertifikat (CertN) oder die Kette von Zertifikaten, deren letztes das Netzzertifikat (CertN) ist, aufweist, und
- in der ersten Computereinheit (U) wird das Netzzertifikat (CertN) oder die Kette von Zertifikaten, deren letztes das Netzzertifikat (CertN) ist, verifiziert wird.

37. Anordnung nach Anspruch 36,
bei der die erste Computereinheit (U) und die zweite Computereinheit (N) derart eingerichtet sind, daß folgende Verfahrensschritte durchführbar sind:
- eine zweite Nachricht (M3) wird von der ersten Computereinheit (U) an die zweite Computereinheit (N) übertragen, wobei die zweite Nachricht (M3) ein Benutzerzertifikat (CertU) oder eine Kette von Zertifikaten, deren letztes das Benutzerzertifikat (CertU) ist, aufweist,
- in der zweiten Computereinheit (N) wird das Benutzerzertifikat (CertU) oder die Kette von Zertifikaten, deren letztes das Benutzerzertifikat (CertU) ist, verifiziert.

38. Anordnung nach einem der Ansprüche 32 bis 37,
bei der die erste Computereinheit (U) und die zweite Computereinheit (N) derart eingerichtet sind, daß folgende Verfahrensschritte durchführbar sind:
- die erste Nachricht (M1) weist eine Identitätsgröße (IMUI) der ersten Computereinheit (U) und eine Identitätsangabe (id_{CA}) einer Zertifizierungscomputereinheit (CA), die der ersten Computereinheit (U) ein Netzzertifikat (CertN) liefert, das von der ersten Computereinheit (U) verifiziert werden kann, auf,
- eine vierte Nachricht (M4) wird von der zweiten Computereinheit (N) an die Zertifizierungscomputereinheit (CA) übertragen, wobei die vierte Nachricht (M4) mindestens den ersten Wert (g^{t}) als Eingangsgröße aufweist,
- eine fünfte Nachricht (M5), die mindestens das Netzzertifikat (CertN) oder eine Zertifikatskette, deren letztes Glied das Netzzertifikat (CertN) ist, oder das Benutzerzertifikat (CertU) oder eine Zertifikatskette, deren letztes Glied das Benutzerzertifikat (CertU) ist, aufweist, wird von der Zertifizierungscomputereinheit (CA) zu der zweiten Computereinheit (N) übertragen,

39. Anordnung nach einem der Ansprüche 32 bis 38,
bei der die erste Computereinheit (U) und die zweite Computereinheit (N) derart eingerichtet sind, daß folgende Verfahrensschritte durchführbar sind:
- eine vierte Nachricht (M4) wird von der zweiten Computereinheit (N) an die Zertifizierungscomputereinheit (CA) übertragen, wobei die vierte Nachricht (M4) mindestens den öffentlichen Netzschlüssel (g^{s}), den ersten Wert (g^{t}), die Identitätsgröße (IMUI) der ersten Computereinheit (U) als Eingangsgröße aufweist und wobei eine Ausgangsgröße einer dritten Hash-Funktion (h3) unter Verwendung einer zweiten Signaturfunktion (Sig_{N}) signiert wird,
- in der Zertifizierungscomputereinheit (CA) wird der erste signierte Term verifiziert,
- in der Zertifizierungscomputereinheit (CA) wird ein dritter Term gebildet, der mindestens den ersten Wert (g^{t}), den öffentlichen Netzschlüssel (g^{s}) und eine Identitätsangabe (id_{N}) der zweiten Computereinheit (N) aufweist,
- in der Zertifizierungscomputereinheit (CA) wird unter Verwendung einer vierten Hash-Funktion (h4) ein Hash-Wert über den dritten Term gebildet,
- in der Zertifizierungscomputereinheit (CA) wird der Hash-Wert über den dritten Term unter Verwendung einer dritten Signaturfunktion (Sig_{cA}) signiert,
- in der Zertifizierungscomputereinheit (CA) wird ein Netzzertifikat (CertN) gebildet, das mindestens den dritten Term und den signierten Hash-Wert des dritten Terms aufweist,
- in der Zertifizierungscomputereinheit (CA) wird auf einen fünften Term, der mindestens die Identitätsangabe (id_{N}) der zweiten Computereinheit (N) und ein Benutzerzertifikat (CertU) aufweist, eine vierte Hash-Funktion (h4) angewendet,
- der Hash-Wert des fünften Terms wird durch Verwendung der dritten Signaturfunktion (Sig_{CA}) mit dem geheimen Zertifizierungsschlüssel (cs) signiert und das Ergebnis stellt den zweiten signierten Term dar,
- eine fünfte Nachricht (M5), die mindestens das Netzzertifikat (CertN), den fünften Term und den zweiten signierten Term aufweist, wird von der Zertifizierungscomputereinheit (CA) zu der zweiten Computereinheit (N) übertragen,
- in der zweiten Computereinheit (N) werden das Netzzertifikat (CertN) und der zweite signierte Term verifiziert,
- in der zweiten Computereinheit (N) wird ein vierter Term, der mindestens den öffentlichen Netzschlüssel (g^{s}) und den signierten Hash-Wert des dritten Terms aufweist, gebildet,
- eine dritte Nachricht (M2) wird von der zweiten Computereinheit (N) an die erste Computereinheit (U) übertragen, wobei die dritte Nachricht (M2) mindestens den vierten Term aufweist, und
- in der ersten Computereinheit (U) wird das Netzzertifikat (CertN) verifiziert.

40. Anordnung nach einem der Ansprüche 33 bis 39,
bei der die erste Computereinheit (U) und die zweite Computereinheit (N) derart eingerichtet sind, daß folgende Verfahrensschritte durchführbar sind:
- die erste Nachricht (M1) weist eine Identitätsgröße (IMUI) der ersten Computereinheit (U) und eine Identitätsangabe (id_{CA}) einer Zertifizierungscomputereinheit (CA), die der ersten Computereinheit (U) ein Netzzertifikat (CertN) oder eine Kette von Zertifikaten, deren letztes das Netzzertifikat (CertN) ist, liefert, das oder die von der ersten Computereinheit (U) verifiziert werden kann oder können, auf,
- eine vierte Nachricht (M4) wird von der zweiten Computereinheit (N) an die Zertifizierungscomputereinheit (CA) übertragen, wobei die vierte Nachricht (M4) mindestens ein Zertifikat auf den öffentlichen Netzschlüssel (g^{s}), den ersten Wert (g^{t})und die Identitätsgröße (IMUI) der ersten Computereinheit (U) aufweist,
- in der Zertifizierungscomputereinheit (CA) wird ein dritter Term gebildet, der mindestens einen öffentlichen Netzschlüssel (g^{s}) oder eine Größe, die den öffentlichen Netzschlüssel (g^{s}) eindeutig bestimmt, aufweist,
- in der Zertifizierungscomputereinheit (CA) wird unter Verwendung einer vierten Hash-Funktion (h4) ein Hash-Wert über den dritten Term gebildet,
- in der Zertifizierungscomputereinheit (CA) wird der Hash-Wert über den dritten Term unter Verwendung einer dritten Signaturfunktion (Sig_{cA}) signiert,
- eine fünfte Nachricht (M5), die mindestens den signierten Hash-Wert über den dritten Term aufweist, wird von der Zertifizierungscomputereinheit (CA) zu der zweiten Computereinheit (N) übertragen,
- in der zweiten Computereinheit (N) wird der signierte Hash-Wert über den dritten Term verifiziert,
- eine dritte Nachricht (M2) wird von der zweiten Computereinheit (N) an die erste Computereinheit (U) übertragen, wobei die dritte Nachricht (M2) mindestens den den signierten Hash-Wert über den dritten Term aufweist, und
- in der ersten Computereinheit (U) wird der signierte Hash-Wert über den dritten Term verifiziert.

41. Anordnung nach Anspruch 40,
bei der die erste Computereinheit (U) und die zweite Computereinheit (N) derart eingerichtet sind, daß folgende Verfahrensschritte durchführbar sind:
der dritte Term weist den öffentlichen Benutzersignaturschlüssel (KU)oder eine Größe, die den Benutzersignaturschlüssel (KU)eindeutig bestimmt, auf.

42. Anordnung nach Anspruch 40 oder 41,
bei der die erste Computereinheit (U) und die zweite Computereinheit (N) derart eingerichtet sind, daß folgende Verfahrensschritte durchführbar sind:
die fünfte Nachricht (M5) sowie die dritte Nachricht (M2) weist mindestens eine Kette von Zertifikaten auf.

43. Anordnung nach einem der Ansprüche 38 bis 42,
bei der die erste Computereinheit (U) und die zweite Computereinheit (N) derart eingerichtet sind, daß folgende Verfahrensschritte durchführbar sind:
der fünfte Term weist einen Zeitstempel (TS) auf.

44. Anordnung nach einem der Ansprüche 38 bis 43,
bei der die erste Computereinheit (U) und die zweite Computereinheit (N) derart eingerichtet sind, daß folgende Verfahrensschritte durchführbar sind:
der dritte Term weist einen Zeitstempel (TS) auf.

45. Anordnung nach einem der Ansprüche 38 bis 44,
bei der die erste Computereinheit (U) und die zweite Computereinheit (N) derart eingerichtet sind, daß folgende Verfahrensschritte durchführbar sind:
- in der ersten Computereinheit (U) wird vor Bildung der ersten Nachricht (M1) ein Zwischenschlüssel (L) gebildet wird, indem ein öffentlicher Schlüsselvereinbarungsschlüssel (g^{u}) mit der ersten Zufallszahl (t) potenziert,
- in der ersten Computereinheit (U) wird vor Bildung der ersten Nachricht (M1) aus der Identitätsgröße (IMUI) der ersten Computereinheit (U) ein zweiter verschlüsselter Term (VT2) gebildet wird, indem die Identitätsgröße (IMUI) mit dem Zwischenschlüssel (L) unter Anwendung einer Verschlüsselungsfunktion (Enc) verschlüsselt,
- die erste Nachricht (M1) weist anstatt der Identitätsgröße (IMUI) der ersten Computereinheit(U) den zweiten verschlüsselten Term (VT2) auf,
- bei dem die vierte Nachricht (M4) anstatt der Identitätsgröße (IMUI) der ersten Computereinheit(U) den zweiten verschlüsselten Term (VT2) aufweist.

46. Anordnung nach einem der Ansprüche 38 bis 45,
bei der die erste Computereinheit (U) und die zweite Computereinheit (N) derart eingerichtet sind, daß folgende Verfahrensschritte durchführbar sind:
- in der fünften Nachricht (M5) ist das Netzzertifikat (CertN) oder eine Zertifikatskette, deren letztes Glied das Netzzertifikat (CertN) ist, oder das Benutzerzertifikat (CertU) oder eine Zertifikatskette, deren letztes Glied das Benutzerzertifikat (CertU) ist, mit L verschlüsselt.

47. Anordnung nach einem der Ansprüche 38 bis 46,
bei der die erste Computereinheit (U) und die zweite Computereinheit (N) derart eingerichtet sind, daß folgende Verfahrensschritte durchführbar sind:
in der Zertifizierungscomputereinheit (CA) wird mindestens eine der Größen, die Identitätsangabe (id_{N}) der zweiten Computereinheit (N), die Identitätsgröße (IMUI)der ersten Computereinheit (U), der öffentliche Netzschlüssel (g^{s}), das Netzzertifikat (CertN) oder das Benutzerzertifikat (CertU) anhand einer Revokationsliste überprüft.

48. Anordnung nach einem der Ansprüche 32 bis 47,
bei der die erste Computereinheit (U) und die zweite Computereinheit (N) derart eingerichtet sind, daß folgende Verfahrensschritte durchführbar sind:
- die erste Nachricht (M1) weist mindestens eine alte temporäre Identitätsgröße (TMUIO) der ersten Computereinheit (U) auf,
- in der zweiten Computereinheit (N) wird, nachdem die erste Nachricht (M1) empfangen wurde und bevor eine dritte Nachricht (M2) gebildet wird, für die erste Computereinheit (U) eine neue temporäre Identitätsgröße gebildet,
- aus der neuen temporären Identitätsgröße der ersten Computereinheit (U) wird ein fünfte verschlüsselter Term (VT5) gebildet, indem die neue temporäre Identitätsgröße der ersten Computereinheit (U) mit dem Sitzungschlüssel (K) unter Anwendung der Verschlüsselungsfunktion (Enc) verschlüsselt wird,
- die dritte Nachricht (M2) weist mindestens den fünften verschlüsselten Term (VT5) auf,
- in der ersten Computereinheit (U) wird, nachdem die dritte Nachricht (M2) empfangen wurde und bevor die vierte Eingangsgröße gebildet wird, der fünfte verschlüsselte Term (VT5) entschlüsselt,
- die dritte Eingangsgröße für die erste Hash-Funktion (h1) oder für die zweite Hash-Funktion zur Bildung der vierten Eingangsgröße weist mindestens die neue temporäre Identitätsgröße der ersten Computereinheit (U) auf, und
- die zweite Nachricht (M3) weist nicht die Identitätsgröße (IMUI) der ersten Computereinheit (U) auf.

49. Anordnung nach einem der Ansprüche 32 bis 48,
bei der die erste Computereinheit (U) und die zweite Computereinheit (N) derart eingerichtet sind, daß folgende Verfahrensschritte durchführbar sind:
- in der zweiten Computereinheit (N) wird eine Information zu dem Sitzungsschlüssel (K) enthaltende Antwort (A) gebildet,
- eine dritte Nachricht (M2) wird von der zweiten Computereinheit (N) an die erste Computereinheit (U) übertragen, wobei die dritte Nachricht (M2) mindestens die Antwort (A) aufweist, und
- in der ersten Computereinheit (U) wird der Sitzungsschlüssel (K) anhand der Antwort (A) überprüft.

50. Anordnung nach einem der Ansprüche 32 bis 49,
bei der die erste Computereinheit (U) und die zweite Computereinheit (N) derart eingerichtet sind, daß folgende Verfahrensschritte durchführbar sind:
die zweite Nachricht (M3) weist eine Identitätsgröße (IMUI) der ersten Computereinheit (U) auf.

51. Anordnung nach einem der Ansprüche 32 bis 48,
bei der die erste Computereinheit (U) und die zweite Computereinheit (N) derart eingerichtet sind, daß folgende Verfahrensschritte durchführbar sind:
- in der zweiten Computereinheit (N) weist die erste Eingangsgröße der ersten Hash-Funktion (h1) mindestens eine zweite Zufallszahl (r) auf,
- die dritte Nachricht (M2) weist die zweite Zufallszahl (r) auf, und
- in der ersten Computereinheit (U) weist die zweite Eingangsgröße der ersten Hash-Funktion (h1) mindestens die zweite Zufallszahl (r) auf.

52. Anordnung nach einem der Ansprüche 32 bis 47,
bei der die erste Computereinheit (U) und die zweite Computereinheit (N) derart eingerichtet sind, daß die Größe bzw. die Größen, welche von der dritten Eingangsgröße erfasst werden, die zweite Zufallszahl (r) enthält bzw. enthalten.

53. Anordnung nach einem der Ansprüche 32 bis 51,
bei der die erste Computereinheit (U) und die zweite Computereinheit (N) derart eingerichtet sind, daß folgende Verfahrensschritte durchführbar sind:
- in der ersten Computereinheit (U) wird vor Bildung der zweiten Nachricht (M3) aus der Identitätsgröße (IMUI) der ersten Computereinheit (U) ein zweiter verschlüsselter Term (VT2) gebildet, indem mindestens die Identitätsgröße (IMUI) mit dem Sitzungsschlüssel (K) unter Anwendung der Verschlüsselungsfunktion (Enc) verschlüsselt wird,
- die zweite Nachricht (M3) weist den zweiten verschlüsselten Term (VT2) auf, und
- in der zweiten Computereinheit (N) wird, nachdem die zweite Nachricht (M3) empfangen wurde, der zweite verschlüsselte Term (VT2) entschlüsselt.

54. Anordnung nach einem der Ansprüche 32 bis 53,
bei der die erste Computereinheit (U) und die zweite Computereinheit (N) derart eingerichtet sind, daß folgende Verfahrensschritte durchführbar sind:
- eine dritte Nachricht (M2) weist ein optionales erstes Datenfeld (dat1) auf, und
- die dritte Eingangsgröße für die erste Hash-Funktion (h1) oder für die zweite Hash-Funktion (h2) zur Bildung der vierten Eingangsgröße weist mindestens das optionale erste Datenfeld (dat1) auf.

55. Anordnung nach einem der Ansprüche 32 bis 54,
bei der die erste Computereinheit (U) und die zweite Computereinheit (N) derart eingerichtet sind, daß folgende Verfahrensschritte durchführbar sind:
- in der ersten Computereinheit (U) wird vor Bildung der zweiten Nachricht (M3) ein dritter verschlüsselter Term (VT3) gebildet, indem mindestens ein optionales zweites Datenfeld (dat2) mit dem Sitzungsschlüssel (K) unter Anwendung der Verschlüsselungsfunktion (Enc) verschlüsselt wird,
- die zweite Nachricht (M3) weist mindestens den dritten verschlüsselten Term (VT3) auf, und
- in der zweiten Computereinheit (N) wird, nachdem die zweite Nachricht (M3) empfangen wurde, der dritte verschlüsselte Term (VT3) entschlüsselt.

56. Anordnung nach einem der Ansprüche 32 bis 55,
bei der die erste Computereinheit (U) und die zweite Computereinheit (N) derart eingerichtet sind, daß folgende Verfahrensschritte durchführbar sind:
- in der ersten Computereinheit (U) wird vor Bildung der zweiten Nachricht (M3) ein erster verschlüsselter Term (VT1) gebildet, indem mindestens der Signaturterm unter Anwendung der Verschlüsselungsfunktion (Enc) verschlüsselt wird,
- die zweite Nachricht (M3) weist den ersten verschlüsselten Term (VT1) auf, und
- in der zweiten Computereinheit (N) wird, nachdem die zweite Nachricht (M3) empfangen wurde und bevor der Signaturterm verifiziert wird, der erste verschlüsselte Term (VT1) entschlüsselt.

57. Anordnung nach einem der Ansprüche 32 bis 56,
bei der die erste Computereinheit (U) und die zweite Computereinheit (N) derart eingerichtet sind, daß folgende Verfahrensschritte durchführbar sind:
in der zweiten Computereinheit (N) wird eine Antwort (A) gebildet, indem eine Konstante (const), sowie eventuell weitere Größen, die in der zweiten Computereinheit (N) und in der ersten Computereinheit (U) bekannt sind, mit dem Sitzungsschlüssel (K) unter Anwendung der Verschlüsselungsfunktion (Enc) verschlüsselt wird.

58. Anordnung nach einem der Ansprüche 44 bis 57,
bei der die erste Computereinheit (U) und die zweite Computereinheit (N) derart eingerichtet sind, daß folgende Verfahrensschritte durchführbar sind:
in der ersten Computereinheit (U) wird die Antwort (A) überprüft, indem eine Konstante (const) sowie eventuell weitere Größen, mit dem Sitzungsschlüssel (K) unter Anwendung der Verschlüsselungsfunktion (Enc) verschlüsselt wird und das Ergebnis mit der Antwort (A) verglichen wird.

59. Anordnung nach einem der Ansprüche 44 bis 57,
bei der die erste Computereinheit (U) und die zweite Computereinheit (N) derart eingerichtet sind, daß folgende Verfahrensschritte durchführbar sind:
in der ersten Computereinheit (U) wird die Antwort (A) überprüft, indem die Antwort (A) mit dem Sitzungsschlüssel (K) unter Anwendung der Verschlüsselungsfunktion (Enc) entschlüsselt wird und eine entschlüsselte Konstante (const') sowie eventuell weitere Größen, mit einer Konstante (const) verglichen wird.

60. Anordnung nach einem der Ansprüche 32 bis 59,
bei der die erste Computereinheit (U) und die zweite Computereinheit (N) derart eingerichtet sind, daß folgende Verfahrensschritte durchführbar sind:
- in der zweiten Computereinheit (N) wird eine Antwort (A) gebildet, indem eine dritte Hash-Funktion (h3) angewendet wird auf eine Eingangsgröße, die mindestens den Sitzungsschlüssel (K) aufweist, und
- in der ersten Computereinheit (U) wird die Antwort (A) überprüft, indem die dritte Hash-Funktion (h3) angewendet wird auf eine Eingangsgröße, die mindestens den Sitzungsschlüssel (K) aufweist, und das Ergebnis mit der Antwort (A) verglichen wird.

61. Anordnung nach einem der Ansprüche 32 bis 60,
bei der die erste Computereinheit (U) und die zweite Computereinheit (N) derart eingerichtet sind, daß folgende Verfahrensschritte durchführbar sind:
die zweite Nachricht (M3) weist mindestens ein optionales zweites Datenfeld (dat2) auf.

62. Anordnung nach einem der Ansprüche 32 bis 61,
bei der die erste Computereinheit (U) und die zweite Computereinheit (N) derart eingerichtet sind, daß folgende Verfahrensschritte durchführbar sind:
die erste Computereinheit (U) durch ein mobiles Kommunikationsendgerät und/oder die zweite Computereinheit (N) wird/werden durch eine Authentifizierungseinheit in einem Mobil-Kommunikationsnetz gebildet.

## Claims

1. A method for the computer-aided exchange of cryptographic keys between a first computer unit (U) and a second computer unit (N),
- in which a first value (g^{t}) is formed from a first random number (t) with the aid of a generating element of a finite group in the first computer unit (U),
- in which a first message (M1) is transmitted from the first computer unit (U) to the second computer unit (N), said first message (M1) containing at least the first value (g^{t}),
- in which a session key (K) is formed in the second computer unit (N) with the aid of a first hash function (h1), wherein a first input variable of the first hash function (h1) includes at least a first term which is formed by means of exponentiation of the first value (g^{t}) using a private network key (s),
- in which the session key (K) is formed in the first computer unit (U) with the aid of the first hash function (h1), wherein a second input variable of the first hash function (h1) includes at least a second term which is formed by means of exponentiation of a public network key (g^{s}) using the first random number (t),
- in which variables are transmitted from the second computer unit (N) to the first computer unit (U), said variables being used for checking the session key (K) in the first computer unit (U),
- in which a fourth input variable is formed in the first computer unit (U) with the aid of a second hash function or the first hash function (h1), wherein a third input variable for the first hash function (h1) or for the second hash function for forming the fourth input variable includes one or more variables from which it is possible definitively to infer the session key, wherein at least a part of the variable or variables is not public,
- in which a signature term is formed in the first computer unit (U) from at least the fourth input variable using a first signature function (Sig_{U}),
- in which a second message (M3) is transmitted from the first computer unit (U) to the second computer unit (N), said second message (M3) containing at least the signature term of the first computer unit (U), and
- in which the signature term is verified in the second computer unit (N).

2. The method as claimed in claim 1,
in which the private network key and/or the public network key is/are long lasting.

3. The method as claimed in claim 1 or 2,
in which the third input variable includes a plurality of variables, from which the session key can be definitively inferred.

4. The method as claimed in one of the claims 1 to 3,
in which the variable or variables which are included in the third input variable contains or contain at least the first value (g^{t}) and/or the public network key (g^{s}).

5. The method as claimed in one of the claims 1 to 4,
- in which the first message (M1) includes an identity declaration (id_{CA}) of a certification computer unit (CA) which supplies a network certificate (CertN) or a chain of certificates, the last of which is the network certificate (CertN), that can be verified by the first computer unit (U),
- in which a third message (M2) is transmitted from the second computer unit (N) to the first computer unit (U), wherein the third message (M2) includes at least the network certificate (CertN) or the chain of certificates, the last of which is the network certificate (CertN), and
- in which the network certificate (CertN) or the chain of certificates, the last of which is the network certificate (CertN), is verified in the first computer unit (U).

6. The method as claimed in claim 5,
- in which a second message (M3) is transmitted from the first computer unit (U) to the second computer unit (N), wherein the second message (M3) includes a user certificate (CertU) or a chain of certificates, the last of which is the user certificate (CertU), and
- in which the user certificate (CertU) or the chain of certificates, the last of which is the user certificate (CertU), is verified in the second computer unit (N).

7. The method as claimed in one of the claims 1 to 6,
- in which the first message (M1) contains an identity variable (IMUI) of the first computer unit (U) and an identity declaration (id_{CA}) of a certification computer unit (CA) which supplies the first computer unit (U) with a network certificate (CertN) that can be verified by the first computer unit (U),
- in which a fourth message (M4) is transmitted from the second computer unit (N) to the certification computer unit (CA), wherein the fourth message (M4) includes at least the first value (g^{t}) as an input variable, and
- in which a fifth message (M5) containing at least the network certificate (CertN) or a certificate chain whose final element is the network certificate (CertN), or the user certificate (CertU) or a certificate chain whose final element is the user certificate (CertU), is transmitted from the certification computer unit (CA) to the second computer unit (N).

8. The method as claimed in one of the claims 1 to 7,
- in which a fourth message (M4) is transmitted from the second computer unit (N) to the certification computer unit (CA), wherein the fourth message (M4) includes at least the public network key (g^{s}) , the first value (g^{t}) and the identity variable (IMUI) of the first computer unit (U) as input variable and wherein an output variable of a third hash function (h3) is signed using a second signature function (Sig_{N}),
- in which the first signed term is verified in the certification computer unit (CA),
- in which a third term, including at least the first value (g^{t}), the public network key (g^{s}) and an identity declaration (id_{N}) of the second computer unit (N), is formed in the certification computer unit (CA),
- in which a hash value for the third term is formed in the certification computer unit (CA) using a fourth hash function (h4),
- in which the hash value for the third term is signed in the certification computer unit (CA) using a third signature function (Sig_{CA}),
- in which a network certificate (CertN), which includes at least the third term and the signed hash value of the third term, is formed in the certification computer unit (CA),
- in which a fourth hash function (h4) is applied to a fifth term, which includes at least the identity declaration (id_{N}) of the second computer unit (N) and a user certificate (CertU), in the certification computer unit (CA),
- in which the hash value of the fifth term is signed with the private certification key (cs) using the third signature function (Sig_{CA}) and the result represents the second signed term,
- in which a fifth message (M5), which includes at least the network certificate (CertN), the fifth term and the second signed term, is transmitted from the certification computer unit (CA) to the second computer unit (N),
- in which the network certificate (CertN) and the second signed term are verified in the second computer unit (N),
- in which a fourth term, which includes at least the public network key (g^{s}) and the signed hash value of the third term, is formed in the second computer unit (N),
- in which a third message (M2) is transmitted from the second computer unit (N) to the first computer unit (U), wherein said third message (M2) includes at least the fourth term, and
- in which the network certificate (CertN) is verified in the first computer unit (U).

9. The method as claimed in one of the claims 1 to 8,
- in which the first message (M1) includes an identity variable (IMUI) of the first computer unit (U) and an identity declaration (id_{CA}) of a certification computer unit (CA) which supplies the first computer unit (U) with a network certificate (CertN) or a chain of certificates, the last of which is the network certificate (CertN), that can be verified by the first computer unit (U),
- in which a fourth message (M4) is transmitted from the second computer unit (N) to the certification computer unit (CA), wherein the fourth message (M4) includes at least a certificate relating to the public network key (g^{s}), the first value (g^{t}) and the identity variable (IMUI) of the first computer unit (U),
- in which a third term, which includes at least the public network key (g^{s}) or a variable which unambiguously specifies the public network key (g^{s}), is formed in the certification computer unit (CA),
- in which a hash value for the third term is formed in the certification computer unit (CA) using a fourth hash function (h4),
- in which the hash value for the third term is signed in the certification computer unit (CA) using a third signature function (Sig_{CA}),
- in which a fifth message (M5), which includes at least the signed hash value for the third term, is transmitted from the certification computer unit (CA) to the second computer unit (N),
- in which the signed hash value for the third term is verified in the second computer unit (N),
- in which a third message (M2) is transmitted from the second computer unit (N) to the first computer unit (U), wherein third message (M2) includes at least the signed hash value for the third term, and
- in which the signed hash value for the third term is verified in the first computer unit (U).

10. The method as claimed in claim 9,
in which the third term includes a public user signature key (KU) or a variable which unambiguously specifies the public user signature key (KU).

11. The method as claimed in claim 9 or 10,
in which the fifth message (M5) and the third message (M2) include at least a chain of certificates.

12. The method as claimed in claim 8,
in which the fifth term includes a time stamp (TS).

13. The method as claimed in one of the claims 9 to 12,
in which the third term includes a time stamp (TS).

14. The method as claimed in one of the claims 7 to 13,
- in which an intermediate key (L) is formed in the first computer unit (U) before forming the first message (M1), by exponentiating a public key agreement key (g^{u}) using the first random number (t),
- in which a second encrypted term (VT2) is formed in the first computer unit (U) from the identity variable (IMUI) of the first computer unit (U) before forming the first message (M1), by encrypting the identity variable (IMUI) with the intermediate key (L) using an encryption function (Enc),
- in which the first message (M1) includes the second encrypted term (VT2) instead of the identity variable (IMUI) of the first computer unit (U), and
- in which the fourth message (M4) includes the second encrypted term (VT2) instead of the identity variable (IMUI) of the first computer unit (U).

15. The method as claimed in one of the claims 7 to 14,
in which the network certificate (CertN) or a certificate chain whose final element is the network certificate (CertN), or the user certificate (CertU) or a certificate chain whose final element is the user certificate (CertU), is encrypted with L in the fifth message (M5).

16. The method as claimed in one of the claims 7 to 15,
in which at least one of the variables, the identity declaration (id_{N}) of the second computer unit (N), the identity variable (IMUI) of the first computer unit (U), the public network key (g^{s}), the network certificate (CertN) or the user certificate (CertU) is checked in the certification computer unit (CA) on the basis of a revocation list.

17. The method as claimed in one of the claims 1 to 16,
- in which the first message (M1) includes at least an old temporary identity variable of the first computer unit (U),
- in which after the first message (M1) has been received and before the third message (M2) is formed, a new temporary identity variable for the first computer unit (U) is formed in the second computer unit (N),
- in which a fifth encrypted term (VT5) is formed from the new temporary identity variable (TMUIN) of the first computer unit (U) by encrypting the new temporary identity variable of the first computer unit (U) with the session key (K) using the encryption function (Enc),
- in which the third message (M2) includes at least the fifth encrypted term (VT5),
- in which after the third message (M2) has been received and before the fourth input variable is formed, the fifth encrypted term (VT5) is decrypted in the first computer unit (U),
- in which the third input variable for the first hash function (h1) or for the second hash function (h2) for forming the fourth input variable includes at least the new temporary identity variable (TMUIN) of the first computer unit (U), and
- in which the second message (M3) does not include the identity variable (IMUI) of the first computer unit (U).

18. The method as claimed in one of the claims 1 to 17,
- in which an answer (A) containing information relating to the session key (K) is formed in the second computer unit (N),
- in which a third message (M2) is transmitted from the second computer unit (N) to the first computer unit (U), wherein the third message (M2) includes at least the answer (A), and
- in which the session key (K) is checked in the first computer unit (U) with reference to the answer (A).

19. The method as claimed in one of the claims 1 to 18,
in which the second message (M3) includes an identity variable (IMUI) of the first computer unit (U).

20. The method as claimed in one of the claims 1 to 19,
- in which the first input variable of the first hash function (h1) in the second computer unit (N) includes at least a second random number (r),
- in which a third message (M2) includes the second random number (r), and
- in which the first input variable of the first hash function (h1) in the second computer unit (U) includes at least the second random number (r).

21. The method as claimed in one of the claims 1 to 20,
in which the variable or variables which are included in the third input variable contains or contain the second random number (r).

22. The method as claimed in one of the claims 1 to 21,
- in which a second encrypted term (VT2) is formed in the first computer unit (U) from the identity variable (IMUI) of the first computer unit (U) before forming the second message (M3), by encrypting at least the identity variable (IMUI) with the session key (K) using the encryption function (Enc),
- in which the second message (M3) includes the second encrypted term (VT2), and
- in which the second encrypted term (VT2) is decrypted in the second computer unit (N) after the second message (M3) has been received.

23. The method as claimed in one of the claims 1 to 22,
- in which a third message (M2) includes an optional first data field (dat1), and
- in which the third input variable for the first hash function (h1) or for the second hash function (h2) for forming the fourth input variable includes at least the optional first data field (dat1).

24. The method as claimed in one of the claims 1 to 23,
- in which a third encrypted term (VT3) is formed in the first computer unit (U) before forming the second message (M3), by encrypting at least an optional second data field (dat2) with the session key (K) using the encryption function (Enc),
- in which the second message (M3) includes at least the third encrypted term (VT3), and
- in which the third encrypted term (VT3) is decrypted in the second computer unit (N) after the second message (M3) has been received.

25. The method as claimed in one of the claims 1 to 24,
- in which a first encrypted term (VT1) is formed in the first computer unit (U) before forming the second message (M3), by encrypting at least at least the signature term using the encryption function (Enc),
- in which the second message (M3) includes the first encrypted term (VT1), and
- in which the first encrypted term (VT1) is decrypted in the second computer unit (N) after the second message (M3) has been received and before the signature term is verified.

26. The method as claimed in one of the claims 1 to 25,
in which an answer (A) is formed in the second computer unit (N) by encrypting a constant (const), and possibly further variables which are known in the second computer unit (N) and in the first computer unit (U), with the session key (K) using the encryption function (Enc).

27. The method as claimed in one of the claims 1 to 26,
in which the answer (A) is checked in the first computer unit (U) by encrypting a constant (const), and possibly further variables, with the session key (K) using the encryption function (Enc), and by comparing the result with the answer (A).

28. The method as claimed in one of the claims 1 to 26,
in which the answer (A) is checked in the first computer unit (U) by decrypting the answer (A) with the session key (K) using the encryption function (Enc), and by comparing a decrypted constant (const') with a constant (const) and possibly further variables.

29. The method as claimed in one of the claims 1 to 28,
- in which an answer (A) is formed in the second computer unit (N) by applying a third hash function (h3) to an input variable which includes at least the session key (K), and
- in which the answer (A) is checked in the first computer unit (U) by applying the third hash function (h3) to the input variable, which includes at least the session key (K), and by comparing the result with the answer (A).

30. The method as claimed in one of the claims 1 to 29,
in which the second message (M3) includes at least an optional second data field (dat2).

31. The method as claimed in one of the claims 1 to 30,
in which the first computer unit (U) is formed by a mobile communication terminal and/or the second computer unit (N) is formed by an authentication unit in a mobile communication network.

32. An arrangement for the computer-aided exchange of cryptographic keys between a first computer unit (U) and a second computer unit (N), in which the first computer unit (U) and the second computer unit (N) are set up such that the following method steps can be carried out:
- a first value (g^{t}) is formed from a first random number (t) with the aid of a generating element of a finite group in the first computer unit (U),
- a first message (M1) is transmitted from the first computer unit (U) to the second computer unit (N), said first message (M1) containing at least the first value (g^{t}),
- a session key (K) is formed in the second computer unit (N) with the aid of a first hash function (h1), wherein a first input variable of the first hash function (h1) includes at least a first term which is formed by means of exponentiation of the first value (g^{t}) using a private network key (s),
- the session key (K) is formed in the first computer unit (U) with the aid of the first hash function (h1), wherein a second input variable of the first hash function (h1) includes at least a second term which is formed by means of exponentiation of a public network key (g^{s}) using the first random number (t),
- variables are transmitted from the second computer unit (N) to the first computer unit (U), said variables being used for checking the session key (K) in the first computer unit (U),
- a fourth input variable is formed in the first computer unit (U) with the aid of a second hash function or the first hash function (h1), wherein a third input variable for the first hash function (h1) or for the second hash function for forming the fourth input variable includes one or more variables from which it is possible definitively to infer the session key, wherein at least a part of the variable or variables is not public,
- a signature term is formed in the first computer unit (U) from at least the fourth input variable using a first signature function (Sig_{U}),
- a second message (M3) is transmitted from the first computer unit (U) to the second computer unit (N), said second message (M3) containing at least the signature term of the first computer unit (U), and
- the signature term is verified in the second computer unit (N).

33. The arrangement as claimed in claim 31,
in which the private network key and/or the public network key is/are long lasting.

34. The arrangement as claimed in claim 32 or 33,
in which the first computer unit (U) and the second computer unit (N) are set up such that the third input variable includes a plurality of variables from which the session key can be definitively inferred.

35. The arrangement as claimed in one of the claims 32 to 34,
in which the first computer unit (U) and the second computer unit (N) are set up such that the variable or variables which are included in the third input variable contains or contain at least the first value (g^{t}) and/or the public network key (g^{s}).

36. The arrangement as claimed in one of the claims 32 to 35,
in which the first computer unit (U) and the second computer unit (N) are set up such that the following method steps can be carried out:
- the first message (M1) includes an identity declaration (id_{CA}) of a certification computer unit (CA) which supplies a network certificate (CertN) or a chain of certificates, the last of which is the network certificate (CertN), that can be verified by the first computer unit (U),
- a third message (M2) is transmitted from the second computer unit (N) to the first computer unit (U), wherein the third message (M2) includes at least the network certificate (CertN) or the chain of certificates, the last of which is the network certificate (CertN), and
- the network certificate (CertN) or the chain of certificates, the last of which is the network certificate (CertN), is verified in the first computer unit (U).

37. The arrangement as claimed in claim 36,
in which the first computer unit (U) and the second computer unit (N) are set up such that the following method steps can be carried out:
- a second message (M3) is transmitted from the first computer unit (U) to the second computer unit (N), wherein the second message (M3) includes a user certificate (CertU) or a chain of certificates, the last of which is the user certificate (CertU), and
- the user certificate (CertU) or the chain of certificates, the last of which is the user certificate (CertU), is verified in the second computer unit (N).

38. The arrangement as claimed in one of the claims 32 to 37,
in which the first computer unit (U) and the second computer unit (N) are set up such that the following method steps can be carried out:
- the first message (M1) contains an identity variable (IMUI) of the first computer unit (U) and an identity declaration (id_{CA}) of a certification computer unit (CA) which supplies the first computer unit (U) with a network certificate (CertN) that can be verified by the first computer unit (U),
- a fourth message (M4) is transmitted from the second computer unit (N) to the certification computer unit (CA), wherein the fourth message (M4) includes at least the first value (g^{t}) as an input variable, and
- a fifth message (M5) containing at least the network certificate (CertN) or a certificate chain whose final element is the network certificate (CertN), or the user certificate (CertU) or a certificate chain whose final element is the user certificate (CertU), is transmitted from the certification computer unit (CA) to the second computer unit (N).

39. The arrangement as claimed in one of the claims 32 to 38,
in which the first computer unit (U) and the second computer unit (N) are set up such that the following method steps can be carried out:
- a fourth message (M4) is transmitted from the second computer unit (N) to the certification computer unit (CA), wherein the fourth message (M4) includes at least the public network key (g^{s}), the first value (g^{t}) and the identity variable (IMUI) of the first computer unit (U) as input variable and wherein an output variable of a third hash function (h3) is signed using a second signature function (Sig_{N}),
- the first signed term is verified in the certification computer unit (CA),
- a third term, including at least the first value (g^{t}), the public network key (g^{s}) and an identity declaration (id_{N}) of the second computer unit (N), is formed in the certification computer unit (CA),
- a hash value for the third term is formed in the certification computer unit (CA) using a fourth hash function (h4),
- the hash value for the third term is signed in the certification computer unit (CA) using a third signature function (Sig_{CA}),
- a network certificate (CertN), which includes at least the third term and the signed hash value of the third term, is formed in the certification computer unit (CA),
- a fourth hash function (h4) is applied to a fifth term, which includes at least the identity declaration (id_{N}) of the second computer unit (N) and a user certificate (CertU), in the certification computer unit (CA),
- the hash value of the fifth term is signed with the private certification key (cs) using the third signature function (Sig_{CA}) and the result represents the second signed term,
- a fifth message (M5), which includes at least the network certificate (CertN), the fifth term and the second signed term, is transmitted from the certification computer unit (CA) to the second computer unit (N),
- the network certificate (CertN) and the second signed term are verified in the second computer unit (N),
- a fourth term, which includes at least the public network key (g^{s}) and the signed hash value of the third term, is formed in the second computer unit (N),
- a third message (M2) is transmitted from the second computer unit (N) to the first computer unit (U), wherein said third message (M2) includes at least the fourth term, and
- the network certificate (CertN) is verified in the first computer unit (U).

40. The arrangement as claimed in one of the claims 33 to 39,
in which the first computer unit (U) and the second computer unit (N) are set up such that the following method steps can be carried out:
- the first message (M1) includes an identity variable (IMUI) of the first computer unit (U) and an identity declaration (id_{CA}) of a certification computer unit (CA) which supplies the first computer unit (U) with a network certificate (CertN) or a chain of certificates, the last of which is the network certificate (CertN), that can be verified by the first computer unit (U),
- a fourth message (M4) is transmitted from the second computer unit (N) to the certification computer unit (CA), wherein the fourth message (M4) includes at least a certificate relating to the public network key (g^{s}), the first value (g^{t}) and the identity variable (IMUI) of the first computer unit (U),
- a third term, which includes at least a public network key (g^{s}) or a variable which unambiguously specifies the public network key (g^{s}), is formed in the certification computer unit (CA),
- a hash value for the third term is formed in the certification computer unit (CA) using a fourth hash function (h4),
- the hash value for the third term is signed in the certification computer unit (CA) using a third signature function (Sig_{CA}),
- a fifth message (M5), which includes at least the signed hash value for the third term, is transmitted from the certification computer unit (CA) to the second computer unit (N),
- the signed hash value for the third term is verified in the second computer unit (N),
- a third message (M2) is transmitted from the second computer unit (N) to the first computer unit (U), wherein said third message (M2) includes at least the signed hash value for the third term, and
- the signed hash value for the third term is verified in the first computer unit (U).

41. The arrangement as claimed in claim 40,
in which the first computer unit (U) and the second computer unit (N) are set up such that the following method steps can be carried out:
the third term includes the public user signature key (KU) or a variable which unambiguously specifies the public user signature key (KU).

42. The arrangement as claimed in claim 40 or 41,
in which the first computer unit (U) and the second computer unit (N) are set up such that the following method steps can be carried out:
the fifth message (M5) and the third message (M2) include at least a chain of certificates.

43. The arrangement as claimed in one of the claims 38 to 42,
in which the first computer unit (U) and the second computer unit (N) are set up such that the following method steps can be carried out:
the fifth term includes a time stamp (TS).

44. The arrangement as claimed in one of the claims 38 to 43,
in which the first computer unit (U) and the second computer unit (N) are set up such that the following method steps can be carried out:
the third term includes a time stamp (TS).

45. The arrangement as claimed in one of the claims 38 to 44,
in which the first computer unit (U) and the second computer unit (N) are set up such that the following method steps can be carried out:
- an intermediate key (L) is formed in the first computer unit (U) before forming the first message (M1), by exponentiating a public key agreement key (g^{u}) using the first random number (t),
- a second encrypted term (VT2) is formed in the first computer unit (U) from the identity variable (IMUI) of the first computer unit (U) before forming the first message (M1), by encrypting the identity variable (IMUI) with the intermediate key (L) using an encryption function (Enc),
- the first message (M1) includes the second encrypted term (VT2) instead of the identity variable (IMUI) of the first computer unit (U), and
- the fourth message (M4) includes the second encrypted term (VT2) instead of the identity variable (IMUI) of the first computer unit (U).

46. The arrangement as claimed in one of the claims 38 to 45,
in which the first computer unit (U) and the second computer unit (N) are set up such that the following method steps can be carried out:
- the network certificate (CertN) or a certificate chain whose final element is the network certificate (CertN), or the user certificate (CertU) or a certificate chain whose final element is the user certificate (CertU), is encrypted with L in the fifth message (M5).

47. The arrangement as claimed in one of the claims 38 to 46,
in which the first computer unit (U) and the second computer unit (N) are set up such that the following method steps can be carried out:
at least one of the variables, the identity declaration (id_{N}) of the second computer unit (N), the identity variable (IMUI) of the first computer unit (U), the public network key (g^{s}), the network certificate (CertN) or the user certificate (CertU) is checked in the certification computer unit (CA) on the basis of a revocation list.

48. The arrangement as claimed in one of the claims 32 to 47,
in which the first computer unit (U) and the second computer unit (N) are set up such that the following method steps can be carried out:
- the first message (M1) includes at least an old temporary identity variable (TMUIO) of the first computer unit (U),
- after the first message (M1) has been received and before a third message (M2) is formed, a new temporary identity variable for the first computer unit (U) is formed in the second computer unit (N),
- a fifth encrypted term (VT5) is formed from the new temporary identity variable of the first computer unit (U) by encrypting the new temporary identity variable of the first computer unit (U) with the session key (K) using the encryption function (Enc),
- the third message (M2) includes at least the fifth encrypted term (VT5),
- after the third message (M2) has been received and before the fourth input variable is formed, the fifth encrypted term (VT5) is decrypted in the first computer unit (U),
- the third input variable for the first hash function (h1) or for the second hash function for forming the fourth input variable includes at least the new temporary identity variable of the first computer unit (U), and
- the second message (M3) does not include the identity variable (IMUI) of the first computer unit (U).

49. The arrangement as claimed in one of the claims 32 to 48,
in which the first computer unit (U) and the second computer unit (N) are set up such that the following method steps can be carried out:
- an answer (A) containing information relating to the session key (K) is formed in the second computer unit (N),
- a third message (M2) is transmitted from the second computer unit (N) to the first computer unit (U), wherein the third message (M2) includes at least the answer (A), and
- the session key (K) is checked in the first computer unit (U) with reference to the answer (A).

50. The arrangement as claimed in one of the claims 32 to 49,
in which the first computer unit (U) and the second computer unit (N) are set up such that the following method steps can be carried out:
the second message (M3) includes an identity variable (IMUI) of the first computer unit (U).

51. The arrangement as claimed in one of the claims 32 to 48,
in which the first computer unit (U) and the second computer unit (N) are set up such that the following method steps can be carried out:
- the first input variable of the first hash function (h1) in the second computer unit (N) includes at least a second random number (r),
- the third message (M2) includes the second random number (r), and
- the second input variable of the first hash function (h1) in the second computer unit (U) includes at least the second random number (r).

52. The arrangement as claimed in one of the claims 32 to 47,
in which the first computer unit (U) and the second computer unit (N) are set up such that the variable or variables which are included in the third input variable contains or contain the second random number (r).

53. The arrangement as claimed in one of the claims 32 to 51,
in which the first computer unit (U) and the second computer unit (N) are set up such that the following method steps can be carried out:
- a second encrypted term (VT2) is formed in the first computer unit (U) from the identity variable (IMUI) of the first computer unit (U) before forming the second message (M3), by encrypting at least the identity variable (IMUI) with the session key (K) using the encryption function (Enc),
- the second message (M3) includes the second encrypted term (VT2), and
- the second encrypted term (VT2) is decrypted in the second computer unit (N) after the second message (M3) has been received.

54. The arrangement as claimed in one of the claims 32 to 53,
in which the first computer unit (U) and the second computer unit (N) are set up such that the following method steps can be carried out:
- a third message (M2) includes an optional first data field (dat1), and
- the third input variable for the first hash function (h1) or for the second hash function (h2) for forming the fourth input variable includes at least the optional first data field (dat1).

55. The arrangement as claimed in one of the claims 32 to 54,
in which the first computer unit (U) and the second computer unit (N) are set up such that the following method steps can be carried out:
- a third encrypted term (VT3) is formed in the first computer unit (U) before forming the second message (M3), by encrypting at least an optional second data field (dat2) with the session key (K) using the encryption function (Enc),
- the second message (M3) includes at least the third encrypted term (VT3), and
- the third encrypted term (VT3) is decrypted in the second computer unit (N) after the second message (M3) has been received.

56. The arrangement as claimed in one of the claims 32 to 55,
in which the first computer unit (U) and the second computer unit (N) are set up such that the following method steps can be carried out:
- a first encrypted term (VT1) is formed in the first computer unit (U) before forming the second message (M3), by encrypting at least the signature term using the encryption function (Enc),
- the second message (M3) includes the first encrypted term (VT1), and
- the first encrypted term (VT1) is decrypted in the second computer unit (N) after the second message (M3) has been received and before the signature term is verified.

57. The arrangement as claimed in one of the claims 32 to 56,
in which the first computer unit (U) and the second computer unit (N) are set up such that the following method steps can be carried out:
an answer (A) is formed in the second computer unit (N) by encrypting a constant (const), and possibly further variables which are known in the second computer unit (N) and in the first computer unit (U), with the session key (K) using the encryption function (Enc).

58. The arrangement as claimed in one of the claims 44 to 57,
in which the first computer unit (U) and the second computer unit (N) are set up such that the following method steps can be carried out:
the answer (A) is checked in the first computer unit (U) by encrypting a constant (const), and possibly further variables, with the session key (K) using the encryption function (Enc), and by comparing the result with the answer (A).

59. The arrangement as claimed in one of the claims 44 to 57,
in which the first computer unit (U) and the second computer unit (N) are set up such that the following method steps can be carried out:
the answer (A) is checked in the first computer unit (U) by decrypting the answer (A) with the session key (K) using the encryption function (Enc), and by comparing a decrypted constant (const') and possibly further variables with a constant (const).

60. The arrangement as claimed in one of the claims 32 to 59,
in which the first computer unit (U) and the second computer unit (N) are set up such that the following method steps can be carried out:
- an answer (A) is formed in the second computer unit (N) by applying a third hash function (h3) to an input variable which includes at least the session key (K), and
- the answer (A) is checked in the first computer unit (U) by applying the third hash function (h3) to an input variable, which includes at least the session key (K), and by comparing the result with the answer (A).

61. The arrangement as claimed in one of the claims 32 to 60,
in which the first computer unit (U) and the second computer unit (N) are set up such that the following method steps can be carried out:
the second message (M3) includes at least an optional second data field (dat2).

62. The arrangement as claimed in one of the claims 32 to 61,
in which the first computer unit (U) and the second computer unit (N) are set up such that the following method steps can be carried out:
the first computer unit (U) is formed by a mobile communication terminal and/or the second computer unit (N) is formed by an authentication unit in a mobile communication network.

## Revendications

1. Procédé pour l'échange assisté par ordinateur de clés cryptographiques entre une première unité d'ordinateur (U) et une seconde unité d'ordinateur (N),
- dans lequel une première valeur (g^{t}) est formée à partir d'un premier nombre aléatoire (t) à l'aide d'un élément générateur d'un groupe fini dans la première unité d'ordinateur (U),
- dans lequel un premier message (M1) est transmis de la première unité d'ordinateur (U) à la seconde unité d'ordinateur (N), le premier message (M1) présentant au moins la première valeur (g^{t}),
- dans lequel une clé de session (K) est formée dans la seconde unité d'ordinateur (N) à l'aide d'une première fonction de hachage (h1), une première grandeur d'entrée de la première fonction de hachage (h1) présentant au moins un premier terme, qui est formé par une élévation à une puissance de la première valeur (g^{t}) avec une clé de réseau (g^{s}) secrète,
- la clé de session (K) est formée dans la première unité d'ordinateur (U) à l'aide de la première fonction de hachage (h1) une seconde grandeur d'entrée de la première fonction de hachage (h1) présentant au moins un premier terme qui est formé par une élévation à une puissance d'une clé de réseau (g^{s}) publique avec le premier nombre aléatoire (t),
- dans lequel des grandeurs sont transmises de la seconde unité d'ordinateur (N) à la première unité d'ordinateur (U), lesquelles sont utilisées pour le contrôle de la clé de session (K) dans la première unité d'ordinateur (U),
- dans lequel, dans la première unité d'ordinateur (U), une quatrième grandeur d'entrée est formée à l'aide d'une seconde fonction de hachage ou de la première fonction de hachage (h1), une troisième grandeur d'entrée pour la première fonction de hachage (h1) ou la seconde fonction de hachage présentant une ou d'autres grandeurs pour la formation de la quatrième grandeur d'entrée, à partir desquelles on peut tirer clairement des conclusions sur la clé de session, au moins une partie de la grandeur ou des grandeurs étant une grandeur non publique,
- dans lequel, dans la première unité d'ordinateur (U), un terme de signature est formé à partir d'au moins la quatrième grandeur d'entrée avec l'utilisation d'une première fonction de signature (Sig_{U}),
- dans lequel le second message (M3) est transmis de la première unité d'ordinateur (U) à la seconde unité d'ordinateur (N), le second message (M3) présentant au moins le terme de signature de la première unité d'ordinateur (U) et
- dans lequel le terme de signature est vérifié dans la seconde unité d'ordinateur (N).

2. Procédé selon la revendication 1,
dans lequel la clé de réseau secrète et/ou la clé de réseau publique est/sont des clés de longue durée.

3. Procédé selon la revendication 1 ou 2,
dans lequel la première grandeur d'entrée présente plusieurs grandeurs à partir desquelles on peut tirer clairement des conclusions sur la clé de session.

4. Procédé selon l'une quelconque des revendications 1 à 3,
dans lequel la grandeur ou les grandeurs, qui sont enregistrées par la troisième grandeur d'entrée, contienne(nt) au moins la première valeur (g^{t}) et/ou la clé de réseau (g^{s}) publique.

5. Procédé selon l'une quelconque des revendications 1 à 4,
- dans lequel le premier message (M1) présente une indication d'identité (id-_{CA}) d'une unité d'ordinateur de certification (CA), qui est un certificat de réseau (CertN) ou une chaîne de certificats, dont le dernier est le certificat de réseau (CertN), laquelle ou lequel peut être vérifié(e) par la première unité d'ordinateur (U),
- dans lequel un troisième message (M2) est transmis de la seconde unité d'ordinateur (N) à la première unité d'ordinateur (U), le troisième message (M2) présentant au moins le certificat de réseau (CertN) ou la chaîne de certificats, dont le dernier est le certificat de réseau (CertN), et
- dans lequel le certificat de réseau (CertN) ou la chaîne de certificats, dont le dernier est le certificat de réseau (CertN), est vérifiée dans la première unité d'ordinateur (U).

6. Procédé selon la revendication 5,
- dans lequel un second message (M3) est transmis de la première unité d'ordinateur (U) à la seconde unité d'ordinateur (N), le second message (M3) présentant un certificat d'utilisateur (CertU) ou une chaîne de certificats, dont le dernier est le certificat d'utilisateur (CertU),
- dans lequel le certificat d'utilisateur (CertU) ou la chaîne de certificats, dont le dernier est le certificat d'utilisateur (CertU), est vérifié(e) dans la seconde unité d'ordinateur (N).

7. Procédé selon l'une quelconque des revendications 1 à 6,
- dans lequel le premier message (M1) présente une grandeur d'identité (IMUI) de la première unité d'ordinateur (U) et une indication d'identité (id_{CA}) d'une unité d'ordinateur de certification (CA), qui fournit à la première unité d'ordinateur (U) un certificat de réseau (CertN) qui peut être vérifié par la première unité d'ordinateur (U),
- dans lequel un quatrième message (M4) est transmis de la seconde unité d'ordinateur (N) à l'unité d'ordinateur de certification (CA), le quatrième message (M4) présentant au moins la première valeur (g^{t}) comme grandeur d'entrée,
- dans lequel un cinquième message (M5), qui est au moins le certificat de réseau (CertN) ou une chaîne de certificats, dont le dernier élément est le certificat de réseau (CertN), ou le certificat d'utilisateur (CertU) ou une chaîne de certificats, dont le dernier élément est le certificat d'utilisateur (CertU), est transmis(e) de l'unité d'ordinateur de certification (CA) à la seconde unité d'ordinateur (N).

8. Procédé selon l'une quelconque des revendications 1 à 7,
- dans lequel un quatrième message (M4) est transmis de la seconde unité d'ordinateur (N) à l'unité d'ordinateur de certification (CA), le quatrième message (M4) présentant au moins la clé de réseau (g^{s}) publique, la première valeur (g^{t}), la grandeur d'identité (IMUI) de la première unité d'ordinateur (U) comme grandeur d'entrée et une grandeur de sortie d'une troisième fonction de hachage (h3) étant signée avec l'utilisation d'une seconde fonction de signature (Sig_{N}),
- dans lequel le premier terme signé est vérifié dans l'unité d'ordinateur de certification (CA),
- dans lequel on forme un troisième terme dans l'unité d'ordinateur de certification (CA) qui présente au moins la première valeur (g^{t}), la clé de réseau (g^{s}) publique et une indication d'identité (id_{N}) de la seconde unité d'ordinateur (N),
- dans lequel une valeur de hachage est formée par le troisième terme dans l'unité d'ordinateur de certification (CA) avec l'utilisation d'une quatrième fonction de hachage (h4),
- dans lequel la valeur de hachage est signée dans l'unité d'ordinateur de certification (CA) par le troisième terme en utilisant une troisième fonction de signature (Sig_{CA}),
- dans lequel on forme dans l'unité d'ordinateur de certification (CA) un certificat de réseau (CertN) qui présente au moins le troisième terme et la valeur de hachage signée du troisième terme,
- dans lequel une quatrième fonction de hachage (h4) est appliquée dans l'unité d'ordinateur de certification (CA) à un cinquième terme, qui présente au moins l'indication d'identité (id_{N}) de la seconde unité d'ordinateur (N) et un certificat d'utilisateur (CertU),
- dans lequel la valeur de hachage du cinquième terme signe par l'utilisation de la troisième fonction de signature (Sig_{CA}) avec la clé de certification (cs) secrète et le résultat représente le second terme signé,
- dans lequel un cinquième message (M5), qui présente au moins le certificat de réseau (CertN), le cinquième terme et le second terme signé, est transmis de l'unité d'ordinateur de certification (CA) à la deuxième unité d'ordinateur (N),
- dans lequel le certificat de réseau (CertN) et le second terme signé sont vérifiés dans la seconde unité d'ordinateur (N),
- dans lequel un quatrième terme, qui présente au moins la clé de réseau (g^{s}) publique et la valeur de hachage signée du troisième terme, est formé dans la seconde unité d'ordinateur (N),
- dans lequel un troisième message (M2) est transmis de la seconde unité d'ordinateur (N) à la première unité d'ordinateur (U), le troisième message (M2) présentant au moins le quatrième terme,
- dans lequel le certificat de réseau (CertN) est vérifié dans la première unité d'ordinateur (U).

9. Procédé selon l'une quelconque des revendications 1 à 8,
- dans lequel le premier message (M1) présente une grandeur d'identité (IMUI) de la première unité d'ordinateur (U) et une indication d'identité (id_{CA}) d'une unité d'ordinateur de certification (CA), qui fournit à la première unité d'ordinateur (U) un certificat de réseau (CertN) ou une chaîne de certificats, dont le dernier est le certificat de réseau (CertN), lequel ou lesquels peut ou peuvent être vérifiés par la première unité d'ordinateur (U),
- dans lequel un quatrième message (M4) est transmis de la seconde unité d'ordinateur (N) à l'unité d'ordinateur de certification (CA), le quatrième message (M4) présentant au moins un certificat sur la clé de réseau (g^{s}) publique, la première valeur (g^{t}) et la grandeur d'identité (IMUI) de la première unité d'ordinateur (U),
- dans lequel on forme dans l'unité d'ordinateur de certification (CA) un troisième terme qui présente au moins la clé de réseau (g^{s}) publique ou une grandeur qui détermine clairement la clé de réseau (g^{s}) publique,
- dans lequel une valeur de hachage est formée par le troisième terme dans l'unité d'ordinateur de certification (CA) avec l'utilisation d'une quatrième fonction de hachage (h4),
- dans lequel la valeur de hachage est signée dans l'unité d'ordinateur de certification (CA) par le troisième terme en utilisant la troisième fonction de signature (Sig_{CA}),
- dans lequel un cinquième message (M5), qui présente au moins la valeur de hachage signée par le troisième terme, est transmis de l'unité d'ordinateur de certification (CA) à la seconde unité d'ordinateur (N),
- dans lequel la valeur de hachage signée est vérifiée par le troisième terme dans la seconde unité d'ordinateur (N),
- dans lequel un troisième message (M2) est transmis de la seconde unité d'ordinateur (N) à la première unité d'ordinateur (U), le troisième message (M2) présentant au moins la valeur de hachage signée par le troisième terme, et
- dans lequel la valeur de hachage signée est vérifiée par le troisième terme dans la première unité d'ordinateur (U).

10. Procédé selon la revendication 9,
dans lequel le troisième terme présente une clé de signature d'utilisateur (KU) publique ou une grandeur qui détermine clairement la clé de signature d'utilisateur (KU).

11. Procédé selon la revendication 9 ou 10,
dans lequel le cinquième message (M5) ainsi que le troisième message (M2) présentent au moins une chaîne de certificats.

12. Procédé selon la revendication 8,
dans lequel le cinquième terme présente un chronotimbre (TS).

13. Procédé selon l'une quelconque des revendications 9 à 12,
dans lequel le troisième terme présente un chronotimbre (TS).

14. Procédé selon l'une quelconque des revendications 7 à 13,
- dans lequel une clé intermédiaire (L) est formée dans la première unité d'ordinateur (U) avant la formation du premier message (M1) du fait qu'une clé d'accord de clé (g^{U}) publique est élevée à une puissance avec le premier nombre aléatoire (t)
- dans lequel un second terme codé (VT2) est formé dans la première unité d'ordinateur (U) avant la formation du premier message (M1) à partir de la grandeur d'identité (IMUI) de la première unité d'ordinateur (U) par le fait que la grandeur d'identité (IMUI) est codée avec la clé intermédiaire (L) avec l'utilisation d'une fonction de codage (Enc),
dans lequel le premier message (M1) présente le second terme (VT2) codé au lieu de la grandeur d'identité (IMUI) de la première unité d'ordinateur (U),
dans lequel le quatrième message (M4) présente le second terme (VT2) codé au lieu de la grandeur d'identité (IMUI) de la première unité d'ordinateur (U).

15. Procédé selon l'une quelconque des revendications 7 à 14,
dans lequel le certificat de réseau (CertN) ou une chaîne de certificats, dont le dernier élément est le certificat de réseau (CertN), ou le certificat d'utilisateur (CertU) ou une chaîne de certificats, dont le dernier élément est le certificat d'utilisateur (CertU), est codé avec L dans le cinquième message (M5).

16. Procédé selon l'une quelconque des revendications 7 à 15,
dans lequel, dans l'unité d'ordinateur de certification (CA), au moins l'une des grandeurs, l'indication d'identité (id_{N}) de la seconde unité d'ordinateur (N), la grandeur d'identité (IMUI) de la première unité d'ordinateur (U), la clé de réseau (g^{s}) publique, le certificat de réseau (CertN) ou le certificat d'utilisateur (CertU) est vérifié à l'aide d'une liste de révocation.

17. Procédé selon l'une quelconque des revendications 1 à 16,
- dans lequel le premier message (M1) présente au moins une ancienne grandeur d'identité temporaire de la première unité d'ordinateur (U),
- dans lequel une nouvelle grandeur d'identité temporaire est formée dans la seconde unité d'ordinateur (N), une fois que le premier message (M1) a été reçu et avant que le troisième message (M2) soit formé, pour la première unité d'ordinateur (U),
- dans lequel, à partir de la nouvelle grandeur d'identité (TMUIN) temporaire de la première unité d'ordinateur (U), on forme un cinquième terme (VT5) codé, dans lequel la nouvelle grandeur d'identité temporaire de la première unité d'ordinateur (U) est codé avec la clé de session (K) en utilisant la fonction de codage (Enc),
- dans lequel le troisième message (M2) présente au moins le cinquième terme (VT5) codé,
- dans lequel le cinquième terme (VT5) codé est décodé dans la première unité d'ordinateur (U), une fois que le troisième message (M2) a été reçu et avant que la quatrième grandeur d'entrée soit formée,
- dans lequel la troisième grandeur d'entrée pour la première fonction de hachage (h1) ou pour la seconde fonction de hachage (h2) pour la formation de la quatrième grandeur d'entrée présente au moins la nouvelle grandeur d'identité (TMUIN) temporaire de la première unité d'ordinateur (U), et
- dans lequel le second message (M3) ne présente pas la grandeur d'identité (IMUI) de la première unité d'ordinateur (U).

18. Procédé selon l'une quelconque des revendications 1 à 17,
- dans lequel une réponse (A) contenant une information sur la clé de session (K) est formée dans la seconde unité d'ordinateur (N),
- dans lequel un troisième message (M2) est transmis de la seconde unité d'ordinateur (N) à la première unité d'ordinateur (U), le troisième message (M2) présentant au moins la réponse (A), et
- dans lequel la clé de session (K) est vérifiée à l'aide de la réponse (A) dans la première unité d'ordinateur (U).

19. Procédé selon l'une quelconque des revendications 1 à 18,
dans lequel le second message (M3) présente une grandeur d'identité (IMUI) de la première unité d'ordinateur (U).

20. Procédé selon l'une quelconque des revendications 1 à 19,
- dans lequel la première grandeur d'entrée de la première fonction de hachage (h1) présente au moins un second nombre aléatoire (r) dans la seconde unité d'ordinateur (N),
- dans lequel un troisième message (M2) présente le second nombre aléatoire (r), et
- dans lequel, dans la première unité d'ordinateur (U), la seconde unité d'entrée de la première fonction de hachage (h1) présente au moins le second nombre aléatoire (r).

21. Procédé selon l'une quelconque des revendications 1 à 20,
dans lequel la grandeur ou les grandeurs, qui sont prises en compte par la troisième grandeur d'entrée, contient ou contiennent le second nombre aléatoire (r).

22. Procédé selon l'une quelconque des revendications 1 à 21,
- dans lequel, dans la première unité d'ordinateur (U), avant la formation du second message (M3), on forme à partir de la grandeur d'identité (IMUI) de la première unité d'ordinateur (U) un second terme (VT2) codé dans lequel au moins la grandeur d'identité (IMUI) est codée avec la clé de session (K) avec l'utilisation de la fonction de codage (Enc),
- dans lequel le second message (M3) présente le second terme (VT2) codé, et
- dans lequel le second terme (VT2) codé est décodé dans la seconde unité d'ordinateur (N) une fois que le second message (M3) a été reçu.

23. Procédé selon l'une quelconque des revendications 1 à 22,
- dans lequel un troisième message (M2) présente un premier champ de données (dat1) optionnel et
- dans lequel la troisième valeur d'entrée pour la première fonction de hachage (h1) ou pour la seconde fonction de hachage (h2) pour la formation de la quatrième grandeur d'entrée présente au moins le premier champ de données (dat1) optionnel.

24. Procédé selon l'une quelconque des revendications 1 à 23,
- dans lequel, dans la première unité d'ordinateur (U) et avant la formation du second message (M3), un troisième terme codé (VT3) est formé par le fait qu'au moins un second champ de données (dat2) optionnel est codé avec la clé de session (K) avec l'utilisation de la fonction de codage (Enc),
- dans lequel le second message (M3) présente au moins le troisième terme (VT3) codé, et
- dans lequel le troisième terme (VT3) codé est décodé dans la seconde unité d'ordinateur (N) après que le second message (M3) a été reçu.

25. Procédé selon l'une quelconque de revendications 1 à 24,
- dans lequel, dans la première unité d'ordinateur (U) et avant la formation du second message (M3), on forme un premier terme (VT1) codé par le fait qu'au moins le terme de signature est codé avec l'utilisation de la fonction de codage (Enc),
- dans lequel le second message (M3) présente le premier terme codé (VT1), et
- dans lequel le premier terme codé (VT1) est décodé dans la seconde unité d'ordinateur (N), une fois que le second message (M3) a été reçu et avant que le terme de signature soit vérifié.

26. Procédé selon l'une quelconque des revendications 1 à 25,
dans lequel on forme dans la seconde unité d'ordinateur (N) une réponse (A) par le fait qu'une constante (const) et éventuellement d'autres grandeurs, qui sont connues dans la seconde unité d'ordinateur (N) et dans la première unité d'ordinateur (U), sont codées avec la clé de session (K) avec l'utilisation de la fonction de codage (Enc).

27. Procédé selon l'une quelconque des revendications 1 à 26,
dans lequel la réponse (A) est vérifiée dans la première unité d'ordinateur (U) par le fait qu'une constante (const) et éventuellement d'autres grandeurs sont codées avec la clé de session (K) avec l'utilisation de la fonction de codage (Enc) et le résultat est comparé avec la réponse (A).

28. Procédé selon l'une quelconque des revendications 1 à 26,
dans lequel la réponse (A) est vérifiée dans la première unité d'ordinateur (U) par le fait que la réponse (A) est décodée avec la clé de session (K) avec l'utilisation de la fonction de codage (Enc) et une constante (const') décodée est comparée avec une constante (const) et éventuellement d'autres grandeurs.

29. Procédé selon l'une quelconque des revendications 1 à 28,
- dans lequel une réponse (A) est formée dans la seconde unité d'ordinateur (N) en utilisant une troisième fonction de hachage (h3) à une grandeur d'entrée qui présente au moins la clé de session (K), et
- dans lequel la réponse (A) est vérifiée dans la première unité d'ordinateur (U) en appliquant la troisième fonction de hachage (h3) à la grandeur d'entrée qui présente au moins la clé de session (K), et le résultat est comparé avec la réponse (A).

30. Procédé selon l'une quelconque des revendications 1 à 29,
dans lequel le second message (M3) présente au moins un second champ de données (dat2) optionnel.

31. Procédé selon l'une quelconque des revendications 1 à 30,
dans lequel la première unité d'ordinateur (U) est formée par un terminal de communication mobile et/ou la seconde unité d'ordinateur (N) est formée par une unité d'authentification dans un réseau de communication mobile.

32. Dispositif pour l'échange assisté par ordinateur de clés cryptographiques entre une première unité d'ordinateur (U) et une seconde unité d'ordinateur (N), dans lequel la première unité d'ordinateur (U) et la seconde unité d'ordinateur (N) sont aménagées de telle sorte que les étapes de procédé suivantes peuvent être réalisées :
- à partir d'un premier nombre aléatoire (t), on forme une première valeur (g^{t}) formée à l'aide d'un élément générateur d'un groupe fini dans la première unité d'ordinateur (U),
- un premier message (M1) est transmis de la première unité d'ordinateur (U) à la seconde unité d'ordinateur (N), le premier message (M1) présentant au moins la première valeur (g^{t}),
- dans la seconde unité d'ordinateur (N), on forme une clé de session (K) à l'aide d'une première fonction de hachage (h1), une première grandeur d'entrée de la première fonction de hachage (h1) présentant au moins un premier terme qui est formé par l'élévation à une puissance de la première valeur (g^{t}) avec une clé de réseau (s) secrète,
- dans la première unité d'ordinateur (U), la clé de session (K) est formée à l'aide de la première fonction de hachage (h1) une seconde grandeur d'entrée de la première fonction de hachage (h1) présentant au moins un second terme qui est formé par l'élévation à une puissance d'une clé de réseau (g^{s}) publique avec le premier nombre aléatoire (t),
- de la seconde unité d'ordinateur (N), des grandeurs sont transmises à la première unité d'ordinateur (U) qui sont utilisées pour le contrôle de la clé de session (K) dans la première unité d'ordinateur (U),
- dans la première unité d'ordinateur (U), une quatrième grandeur d'entrée est formée à l'aide d'une seconde fonction de hachage ou de la première fonction de hachage (h1), une troisième grandeur d'entrée pour la première fonction de hachage (h1) ou pour la seconde fonction de hachage pour la formation de la quatrième grandeur d'entrée présentant une ou d'autres grandeurs à partir desquelles on peut tirer clairement des conclusions sur la clé de session, ou moins une partie de la grandeur ou des grandeurs étant une grandeur non publique,
- dans la première unité d'ordinateur (U), on forme un terme de signature à partir d'au moins la quatrième grandeur d'entrée avec l'utilisation d'une première fonction de signature (Sig_{U}),
- un second message (M3) est transmis de la première unité d'ordinateur (U) à la seconde unité d'ordinateur (N), le second message (M3) présentant au moins le terme de signature de la première unité d'ordinateur (U), et
- le terme de signature étant vérifié dans la seconde unité d'ordinateur (N).

33. Dispositif selon la revendication 31,
dans lequel la clé de réseau secrète et/ou la clé de réseau publique est/sont des clés de longue durée.

34. Dispositif selon la revendication 32 ou 33,
dans lequel la première unité d'ordinateur (U) et la seconde unité d'ordinateur (N) sont aménagées de telle sorte que la troisième grandeur d'entrée présente plusieurs grandeurs à partir desquelles on peut tirer clairement des conclusions sur la clé de session.

35. Dispositif selon l'une quelconque des revendications 32 à 34,
dans lequel la première unité d'ordinateur (U) et la seconde unité d'ordinateur (N) sont aménagées de sorte que la grandeur ou les grandeurs, qui sont prises en compte par la troisième grandeur d'entrée, contient ou contiennent au moins la première valeur (g^{t}) et/ou la clé de réseau (g^{s}) publique.

36. Dispositif selon l'une quelconque des revendications 32 à 35,
dans lequel la première unité d'ordinateur (U) et la seconde unité d'ordinateur (N) sont aménagées de telle sorte que les étapes de procédé suivantes peuvent être mises en oeuvre :
- le premier message (M1) présente une indication d'identité (id_{CA}) d'une unité d'ordinateur de certification (CA), qui fournit un certificat de réseau (CertN) ou une chaîne de certificats, dont le dernier est le certificat de réseau (CertN), lequel ou laquelle peut être vérifié(e) par la première unité d'ordinateur (U),
- un troisième message (M2) est transmis de la seconde unité d'ordinateur (N) à la première unité d'ordinateur (U), le troisième message (M2) présentant au moins le certificat de réseau (CertN) ou la chaîne de certificats, dont le dernier est le certificat de réseau (CertN), et
- dans la première unité d'ordinateur (U), le certificat de réseau (CertN) ou la chaîne de certificats, dont le dernier est le certificat de réseau (CertN), est vérifié(e).

37. Dispositif selon la revendication 36,
dans lequel la première unité d'ordinateur (U) et la seconde unité d'ordinateur (N) sont aménagées de telle sorte que les étapes de procédé suivantes peuvent être mises en oeuvre:
- un second message (M3) est transmis de la première unité d'ordinateur (U) à la seconde unité d'ordinateur (N), le troisième message (M2) présentant un certificat d'utilisateur (CertU) ou une chaîne de certificats, dont le dernier est le certificat d'utilisateur (CertU),
- dans la seconde unité d'ordinateur (N), le certificat d'utilisateur (CertU) ou la chaîne de certificats, dont le dernier est le certificat d'utilisateur (CertU), est vérifié(e).

38. Dispositif selon l'une quelconque des revendications 32 à 37,
dans lequel la première unité d'ordinateur (U) et la seconde unité d'ordinateur (N) sont aménagées de telle sorte que les étapes de procédé suivantes peuvent être mises en oeuvre:
- le premier message (M1) présente une grandeur d'identité (IMUI) de la première unité d'ordinateur (U) et une indication d'identité (id_{CA}) d'une unité d'ordinateur de certification (CA), qui fournit à la première unité d'ordinateur (U) un certificat de réseau (CertN) qui peut être vérifié par la première unité d'ordinateur (U),
- un quatrième message (M4) est transmis de la seconde unité d'ordinateur (N) à l'unité d'ordinateur de certification (CA), le quatrième message (M4) présentant au moins la première valeur (g^{t}) comme grandeur d'entrée,
- un cinquième message (M5), qui présente au moins le certificat de réseau (CertN) ou une chaîne de certificats, dont le dernier maillon est le certificat de réseau (CertN), ou le certificat d'utilisateur (CertU) ou une chaîne de certificats, dont le dernier maillon est le certificat d'utilisateur (CertU), est transmis(e) de l'unité d'ordinateur de certification (CA) à la seconde unité d'ordinateur (N).

39. Dispositif selon l'une quelconque des revendications 32 à 38,
dans lequel la première unité d'ordinateur (U) et la seconde unité d'ordinateur (N) sont aménagées de telle sorte que les étapes de procédé suivantes peuvent être mises en oeuvre:
- un quatrième message (M4) est transmis de la seconde unité d'ordinateur (N) à l'unité d'ordinateur de certification (CA), le quatrième message (M4) présentant au moins la clé de réseau (g^{s}) publique, la première valeur (g^{t}), la grandeur d'identité (IMUI) de la première unité d'ordinateur (U) comme grandeur d'entrée et une grandeur de sortie d'une troisième fonction de hachage (h3) étant signée avec l'utilisation d'une seconde fonction de signature (Sig_{N}),
- le premier terme signé est vérifié dans l'unité d'ordinateur de certification (CA),
- dans l'unité d'ordinateur de certification (CA), on forme un troisième terme qui présente au moins la première valeur (g^{t}), la clé de réseau (g^{s}) publique et une indication d'identité (id_{N}) de la seconde unité d'ordinateur (N),
- dans l'unité d'ordinateur de certification (CA), on forme une valeur de hachage par le troisième terme en utilisant une quatrième fonction de hachage (h4),
- dans l'unité d'ordinateur de certification (CA), la valeur de hachage est signée par le troisième terme en utilisant une troisième fonction de signature (Sig_{CA}),
- dans l'unité d'ordinateur de certification (CA), on forme un certificat de réseau (CertN) qui présente au moins le troisième terme et la valeur de hachage signée du troisième terme,
- dans l'unité d'ordinateur de certification (CA), on applique une quatrième fonction de hachage (h4) à un cinquième terme qui présente au moins l'indication d'identité (id_{N}) de la seconde unité d'ordinateur (N) et un certificat d'utilisateur (CertU),
- la valeur de hachage du cinquième terme est signée par l'utilisation de la troisième fonction de signature (Sig_{CA}) avec la clé de certification (cs) secrète et le résultat représente le second terme signé,
- un cinquième message (M5) qui présente au moins le certificat de réseau (CertN), le cinquième terme et le second terme signé, est transmis de l'unité d'ordinateur de certification (CA) à la seconde unité d'ordinateur (N),
- dans la seconde unité d'ordinateur (N), le certificat de réseau (CertN) et le second terme signé sont vérifiés,
- dans la seconde unité d'ordinateur (N), on forme un quatrième terme qui présente au moins la clé de réseau (g^{s}) publique et la valeur de hachage signée du troisième terme,
- un troisième message (M2) est transmis de la seconde unité d'ordinateur (N) à la première unité d'ordinateur (U), le troisième message (M2) présentant au moins le quatrième terme, et
- le certificat de réseau (CertN) est vérifié dans la première unité d'ordinateur (U).

40. Dispositif selon l'une quelconque des revendications 33 à 39,
dans lequel la première unité d'ordinateur (U) et la seconde unité d'ordinateur (N) sont aménagées de telle sorte que les étapes de procédé suivantes peuvent être mises en oeuvre:
- le premier message (M1) présente une grandeur d'identité (IMUI) de la première unité d'ordinateur (U) et une indication d'identité (id_{CA}) d'une unité d'ordinateur de certification (CA), qui fournit à la première unité d'ordinateur (U) un certificat de réseau (CertN) ou une chaîne de certificats, dont le dernier est le certificat de réseau (CertN), qui peut ou peuvent être vérifiés par la première unité d'ordinateur (U),
- un quatrième message (M4) est transmis de la seconde unité d'ordinateur (N) à l'unité d'ordinateur de certification (CA), le quatrième message (M4) présentant au moins un certificat sur la clé de réseau (g^{s}) publique, la première valeur (g^{t}) et la grandeur d'identité (IMUI) de la première unité d'ordinateur (U),
- dans l'unité d'ordinateur de certification (CA), on forme un troisième terme qui présente au moins une clé de réseau (g^{s}) publique ou une grandeur qui détermine clairement la clé de réseau (g^{s}) publique,
- dans l'unité d'ordinateur de certification (CA), une valeur de hachage est formée par le troisième terme avec l'utilisation d'une quatrième fonction de hachage (h4),
- dans l'unité d'ordinateur de certification (CA), la valeur de hachage est signée par le troisième terme avec l'utilisation d'une troisième fonction de signature (Sig_{CA}),
- un cinquième message (M5), qui présente au moins la valeur de hachage signée par le troisième terme, est transmis de l'unité d'ordinateur de certification (CA) à la seconde unité d'ordinateur (N),
- dans la seconde unité d'ordinateur (N), on vérifie la valeur de hachage signée par le troisième terme,
- un troisième message (M2) est transmis de la seconde unité d'ordinateur (N) à la première unité d'ordinateur (U), le troisième message présentant au moins la valeur de hachage signée par le troisième terme, et
- dans la première unité d'ordinateur (U), on vérifie la valeur de hachage signée par le troisième terme.

41. Dispositif selon la revendication 40,
dans lequel la première unité d'ordinateur (U) et la seconde unité d'ordinateur (N) sont aménagées de telle sorte que les étapes de procédé suivantes peuvent être mises en oeuvre :
le troisième terme présente la clé de signature utilisateur (KU) publique ou une grandeur qui détermine clairement la clé de signature utilisateur (KU).

42. Dispositif selon la revendication 40 ou 41,
dans lequel la première unité d'ordinateur (U) et la seconde unité d'ordinateur (N) sont aménagées de telle sorte que les étapes de procédé suivantes peuvent être mises en oeuvre:
le cinquième message (M5) et le troisième message (M2) présentent au moins une chaîne de certificats.

43. Dispositif selon l'une quelconque des revendications 38 à 42,
dans lequel la première unité d'ordinateur (U) et la seconde unité d'ordinateur (N) sont aménagées de telle sorte que les étapes de procédé suivantes peuvent être mises en oeuvre:
le cinquième terme présente un chronotimbre (TS).

44. Dispositif selon l'une quelconque des revendications 38 à 43,
dans lequel la première unité d'ordinateur (U) et la seconde unité d'ordinateur (N) sont aménagées de telle sorte que les étapes de procédé suivantes peuvent être mises en oeuvre :
le troisième terme présente un chronotimbre (TS).

45. Dispositif selon l'une quelconque des revendications 38 à 44,
dans lequel la première unité d'ordinateur (U) et la seconde unité d'ordinateur (N) sont aménagées de telle sorte que les étapes de procédé suivantes peuvent être mises en oeuvre :
- dans la première unité d'ordinateur (U), une clé intermédiaire (L) est formée avant la formation du premier message (M1) par le fait qu'une clé d'accord de clé (g^{u}) publique est élevée à une puissance avec le premier nombre aléatoire (t),
- dans la première unité d'ordinateur (U), un second terme (VT2) codé est formé avant la formation du premier message à partir de la grandeur d'identité (IMUI) de la première unité d'ordinateur (U) du fait que la grandeur d'identité (IMUI) code avec la clé intermédiaire (L) en utilisant une fonction de codage (Enc),
- le premier message (M1) présente au lieu de la grandeur d'identité (IMUI) de la première unité d'ordinateur (U) le second terme (VT2) codé,
- sur lequel le quatrième message (M4) présente au lieu de la grandeur d'identité (IMUI) de la première unité d'ordinateur (U) le second terme (VT2) codé.

46. Dispositif selon l'une quelconque des revendications 38 à 45,
dans lequel la première unité d'ordinateur (U) et la seconde unité d'ordinateur (N) sont aménagées de telle sorte que les étapes de procédé suivantes peuvent être mises en oeuvre :
- dans le cinquième message (M5), le certificat de réseau (CertN) ou une chaîne de certificats, dont le dernier élément est le certificat de réseau (CertN), ou le certificat d'utilisateur (CertU) ou une chaîne de certificats, dont le dernier maillon est le certificat d'utilisateur (CertU), est codé(e) avec L.

47. Dispositif selon l'une quelconque des revendications 38 à 46,
dans lequel la première unité d'ordinateur (U) et la seconde unité d'ordinateur (N) sont aménagées de telle sorte que les étapes de procédé suivantes peuvent être mises en oeuvre:
dans l'unité d'ordinateur de certification (CA), on vérifie à l'aide d'une liste de révocation au moins l'une des grandeurs suivantes : l'indication d'identité (id_{N}) de la seconde unité d'ordinateur (N), la grandeur d'identité (IMUI) de la première unité d'ordinateur (U), la clé de réseau (g^{s}) publique, le certificat de réseau (CertN) ou le certificat d'utilisateur (CertU).

48. Dispositif selon l'une quelconque des revendications 32 à 47,
dans lequel la première unité d'ordinateur (U) et la seconde unité d'ordinateur (N) sont aménagées de telle sorte que les étapes de procédés peuvent être mises en oeuvre :
- le premier message (M1) présente au moins une ancienne grandeur d'identité temporaire (TMUIO) de la première unité d'ordinateur (U),
- dans la seconde unité d'ordinateur (N), une nouvelle grandeur d'identité temporaire est formée pour la première unité d'ordinateur (U) après que le premier message (M1) a été reçu et avant qu'un troisième message (M2) soit formé,
- à partir de la nouvelle grandeur d'identité temporaire de la première unité d'ordinateur (U), on forme un cinquième terme (VT5) codé par le fait que la nouvelle grandeur d'identité temporaire de la première unité d'ordinateur (U) est codée avec la clé de session (K) avec l'utilisation de la fonction de codage (Enc),
- le troisième message (M2) présente au moins le cinquième terme (VT5) codé,
- dans la première unité d'ordinateur (U), le cinquième terme (VT5) codé est décodé une fois que le troisième message (M2) a été reçu et avant que la quatrième grandeur d'entrée soit formée,
- la troisième grandeur d'entrée pour la première fonction de hachage (h1) ou pour la seconde fonction de hachage pour la formation de la quatrième grandeur d'entrée présente au moins la nouvelle grandeur d'identité temporaire de la première unité d'ordinateur (U) et
- le second message (M3) ne présente pas la grandeur d'identité (IMUI) de la première unité d'ordinateur (U).

49. Dispositif selon l'une quelconque des revendications 32 à 48,
dans lequel la première unité d'ordinateur (U) et la seconde unité d'ordinateur (N) sont aménagées de telle sorte que les étapes de procédé suivantes peuvent être mises en oeuvre :
- dans la seconde unité d'ordinateur (N), on forme une réponse (A) contenant de l'information au sujet de la clé de session (K),
- un troisième message (M2) est transmis de la seconde unité d'ordinateur (N) à la première unité d'ordinateur (U), le troisième message (M2) présentant au moins la réponse (A), et
- dans la première unité d'ordinateur (U), la clé de session (K) est vérifiée à l'aide de la réponse (A).

50. Dispositif selon l'une quelconque des revendications 32 à 49,
dans lequel la première unité d'ordinateur (U) et la seconde unité d'ordinateur (N) sont aménagées de telle sorte que les étapes de procédé suivantes peuvent être mises en oeuvre :
le second message (M3) présente une grandeur d'identité (IMUI) de la première unité d'ordinateur (U).

51. Dispositif selon l'une quelconque des revendications 32 à 48,
dans lequel la première unité d'ordinateur (U) et la seconde unité d'ordinateur (N) sont aménagées de telle sorte que les étapes de procédé suivantes peuvent être mises en oeuvre :
- dans la seconde unité d'ordinateur (N), la première grandeur d'entrée de la première fonction de hachage (h1) présente au moins un second nombre aléatoire (r),
- le troisième message (M2) présente le second nombre aléatoire (r), et
- dans la première unité d'ordinateur (U), la seconde grandeur d'entrée de la première fonction de hachage (h1) présente au moins le second nombre aléatoire (r).

52. Dispositif selon l'une quelconque des revendications 32 à 47,
dans lequel la première unité d'ordinateur (U) et la seconde unité d'ordinateur (N) sont aménagées de telle sorte que la grandeur ou les grandeurs, qui sont prises en compte par la troisième grandeur d'entrée, contient ou contiennent le second nombre aléatoire (r).

53. Dispositif selon l'une quelconque des revendications 32 à 51,
dans lequel la première unité d'ordinateur (U) et la seconde unité d'ordinateur (N) sont aménagées de telle sorte que les étapes de procédé suivantes peuvent être mises en oeuvre:
- dans la première unité d'ordinateur (U), on forme un second terme (VT2) codé avant la formation du second message (M3) à partir de la grandeur d'identité (IMUI) de la première unité d'ordinateur (U) par le fait qu'au moins la grandeur d'identité (IMUI) est codée avec la clé de session (K) avec l'utilisation de la fonction de codage (Enc),
- le second message (M3) présente le second terme (VT2) codé, et
- dans la seconde unité d'ordinateur (N), le second terme (VT2) codé est décodé une fois que le second message (M3) a été reçu.

54. Dispositif selon l'une quelconque des revendications 32 à 53,
dans lequel la première unité d'ordinateur (U) et la seconde unité d'ordinateur (N) sont aménagées de telle sorte que les étapes de procédé suivantes peuvent être mises en oeuvre:
- un troisième message (M2) présente un premier champ de données (dat1) optionnel, et
- la troisième grandeur d'entrée pour la première fonction de hachage (h1) ou pour la seconde fonction de hachage (h2) pour la formation de la quatrième grandeur d'entrée présente au moins le premier champ de données (dat1) optionnel.

55. Dispositif selon l'une quelconque des revendications 32 à 54,
dans lequel la première unité d'ordinateur (U) et la seconde unité d'ordinateur (N) sont aménagées de telle sorte que les étapes de procédé suivantes peuvent être mises en oeuvre :
- dans la première unité d'ordinateur (U), un troisième terme (VT3) codé est formé avant la formation du second message (M3) par le fait qu'au moins un second champ de données (dat2) optionnel est codé avec la clé de session (K) avec l'utilisation de la fonction de codage (Enc),
- le second message (M3) présente au moins le troisième terme (VT3) codé, et
- dans la seconde unité d'ordinateur (N), le troisième terme (VT3) codé est décodé une fois que le second message (M3) a été reçu.

56. Dispositif selon l'une quelconque des revendications 32 à 55,
dans lequel la première unité d'ordinateur (U) et la seconde unité d'ordinateur (N) sont aménagées de telle sorte que les étapes de procédé suivantes peuvent être mises en oeuvre:
- dans la première unité d'ordinateur (U), un premier terme (VT1) codé est formé avant la formation du second message (M3) par le fait qu'au moins le terme de signature est codé en utilisant la fonction de codage (Enc),
- le second message (M3) présente le premier terme (VT1) codé, et
- dans la seconde unité d'ordinateur (N), le premier terme (VT1) codé est décodé une fois que le second message (M3) a été reçu et avant que le terme de signature soit vérifié.

57. Dispositif selon l'une quelconque des revendications 32 à 56,
dans lequel la première unité d'ordinateur (U) et la seconde unité d'ordinateur (N) sont aménagées de telle sorte que les étapes de procédé suivantes peuvent être mises en oeuvre :
dans la seconde unité d'ordinateur (N), on forme une réponse (A) par le fait qu'une constante (const), ainsi qu'éventuellement d'autres grandeurs, qui sont connues dans la seconde unité d'ordinateur (N) et dans la première unité d'ordinateur (U), est codée avec la clé de session (K) en utilisant la fonction de codage (Enc).

58. Dispositif selon l'une quelconque des revendications 44 à 57,
dans lequel la première unité d'ordinateur (U) et la seconde unité d'ordinateur (N) sont aménagées de telle sorte que les étapes de procédé suivantes peuvent être mises en oeuvre :
dans la première unité d'ordinateur (U), on vérifie la réponse (A) par le fait qu'une constante (const) et éventuellement d'autres grandeurs sont codées avec la clé de session (K) avec l'utilisation de la fonction de codage (Enc) et le résultat est comparé avec la réponse (A).

59. Dispositif selon l'une quelconque des revendications 44 à 57,
dans lequel la première unité d'ordinateur (U) et la seconde unité d'ordinateur (N) sont aménagées de telle sorte que les étapes de procédé suivantes peuvent être mises en oeuvre :
dans la première unité d'ordinateur (U), on vérifie la réponse (A) par le fait que la réponse (A) est décodée avec la clé de session (K) avec l'utilisation de la fonction de codage (Enc) et une constante (const') décodée et éventuellement d'autres grandeurs sont comparées avec une constante (const).

60. Dispositif selon l'une quelconque des revendications 32 à 59,
dans lequel la première unité d'ordinateur (U) et la seconde unité d'ordinateur (N) sont aménagées de telle sorte que les étapes de procédé suivantes peuvent être mises en oeuvre :
- dans la seconde unité d'ordinateur (N), on forme une réponse (A) par le fait qu'une troisième fonction de hachage (h3) est appliquée à une grandeur d'entrée qui présente au moins la clé de session (K), et
- dans la première unité d'ordinateur (U), on vérifie la réponse (A) par le fait que la troisième fonction de hachage (h3) est appliquée à une grandeur d'entrée qui présente au moins la clé de session (K), et le résultat est comparé avec la réponse (A).

61. Dispositif selon l'une quelconque des revendications 32 à 60,
dans lequel la première unité d'ordinateur (U) et la seconde unité d'ordinateur (N) sont aménagées de telle sorte que les étapes de procédé suivantes peuvent être mises en oeuvre :
le second message (M3) présente au moins un second champ de données (dat2) optionnel.

62. Dispositif selon l'une quelconque des revendications 32 à 61,
dans lequel la première unité d'ordinateur (U) et la seconde unité d'ordinateur (N) sont aménagées de telle sorte que les étapes de procédé suivantes peuvent être mises en oeuvre :
la première unité d'ordinateur (U) est formée par un terminal de communication mobile et/ou la seconde unité d'ordinateur (N) est formée par une unité d'identification dans un réseau de communication mobile.
